# EUROPEAN PATENT APPLICATION

(11) **EP 4 528 652 A1**
(43) Date of publication of application: **26.03.2025**
(21) Application number: 23893291.7
(22) Date of filing: 17.08.2023
(51) Int. Cl.: G06T 11/60

(54) **PHOTO EDITING METHOD, ELECTRONIC DEVICE AND READABLE STORAGE MEDIUM**

(30) Priority: 22.11.2022 CN 202211467837
(71) Applicant: Honor Device Co., Ltd., Shenzhen, Guangdong 518040 (CN)
(72) Inventor: LI, Siwen, Shenzhen, Guangdong 518040 (CN)
(74) Representative: Gill Jennings & Every LLP
(86) International application number: PCT/CN2023/113617
(87) International publication number: WO 2024/109193

(57) **Abstract**

This application provides a picture editing method, an electronic device, and a readable storage medium, and relates to the field of picture editing technologies. **In** the method, the electronic device may provide a frame function and a doodle function. The electronic device may sequentially perform a frame adding operation and a doodle operation on the picture. **In** a doodle process, when a drawing track corresponding to the doodle operation passes through a picture inside a frame (that is, a picture area), the electronic device generates a doodle trace for the drawing track inside the frame. When the drawing track corresponding to the doodle operation passes through the frame itself, the electronic device no longer generates a doodle trace for the drawing track on the frame, that is, the doodle operation takes effect in a non-frame area, and does not take effect in a frame area, thereby improving user experience.

## Description

This application claims priority to Chinese Patent Application No. 202211467837.8, filed with the China National Intellectual Property Administration on November 22, 2022 and entitled "PICTURE EDITING METHOD, ELECTRONIC DEVICE, AND READABLE STORAGE MEDIUM", which is incorporated herein by reference in its entirety.

### TECHNICAL FIELD

This application relates to the field of picture editing technologies, and in particular, to a picture editing method, an electronic device, and a readable storage medium.

### BACKGROUND

The electronic device may provide picture editing functions, for example, editing and processing functions such as Crop, Filter, Doodle, Mosaic, and Frame. Generally, a user may perform one or more of the foregoing editing processes on a picture by using the electronic device.

Currently, in a picture editing process, an operation of adding a frame to a picture by the user will trigger the electronic device to generate a picture that includes the frame. The user may continue to perform a doodle operation on the picture that includes the frame. When the doodle operation passes through an area of the frame, a doodle trace corresponding to the doodle operation is generated in the frame area, resulting in poor user experience.

### SUMMARY

This application provides a picture editing method, an electronic device, and a readable storage medium. When a frame is first added to a picture and then doodle is performed, the electronic device generates a doodle trace corresponding to a doodle operation on an image inside the frame, and does not generate a doodle trace corresponding to the doodle operation on the frame, thereby improving user experience.

To achieve the foregoing objective, the following technical solutions are used in this application:

According to a first aspect, this application provides a picture editing method, and the method includes:
an electronic device displays a first picture and a first control;
the electronic device receives a first operation, where the first operation acts on the first control;
the electronic device displays a second picture in response to the first operation, where the second picture includes content of the first picture and a frame surrounding the content of the first picture;
the electronic device receives a second operation, where the second operation is a first sliding operation performed by a user on the second picture, and the first sliding operation passes through an area in which the content of the first picture in the second picture is located and an area in which the frame is located; and
in response to the first sliding operation, the electronic device displays, in the area in which the content of the first picture is located, a first doodle trace corresponding to the first sliding operation, and skips displaying, in the area in which the frame is located, a doodle trace corresponding to the first sliding operation.

In this application, a frame may be added to the first picture to obtain the second picture, and then doodle is performed on the second picture. When the doodle operation passes through the area in which the content of the first picture in the second picture is located and the area in which the frame is located, the first doodle trace corresponding to the first sliding operation is displayed in the area in which the content of the first picture is located, and no doodle trace corresponding to the first sliding operation is displayed in the area in which the frame is located. Therefore, user experience is improved.

As an implementation of the first aspect of this application, before the electronic device receives the second operation, the method further includes:
the electronic device displays the second picture and a second control; and
the electronic device receives a third operation, where the third operation acts on the second control.

In this application, before generating the doodle trace on the second picture, the electronic device needs to trigger, by using the second control, the electronic device to enable a doodle function. Only after the doodle function is enabled, a doodle trace can be generated based on a sliding operation on the second picture.

As another implementation of the first aspect of this application, before the electronic device receives the third operation, the method further includes:
the electronic device receives a fourth operation, where the fourth operation is a second sliding operation performed by the user on the second picture, and the second sliding operation passes through the area in which the content of the first picture in the second picture is located and the area in which the frame is located; and
in response to the second sliding operation, the electronic device does not display, in the area in which the content of the first picture is located, a doodle trace corresponding to the second sliding operation, and does not display, in the area in which the frame is located, a doodle trace corresponding to the second sliding operation.

In this application, before the electronic device triggers, by using the second control, the electronic device to enable the doodle function, a sliding operation on the second picture does not result in generation of a doodle trace.

In another implementation of the first aspect of this application, after the electronic device displays, in the area in which the content of the first picture is located, the first doodle trace corresponding to the first sliding operation, and skips displaying, in the area in which the frame is located, the doodle trace corresponding to the first sliding operation, the method further includes:
the electronic device displays a first area of a third picture, where the third picture includes the content of the first picture, the frame surrounding the content of the first picture, and the first doodle trace in the area in which the content of the first picture is located, and the first area includes partial content of the first picture and partial content of the frame;
the electronic device receives a fifth operation, where the fifth operation is a third sliding operation performed by the user on the third picture, and the third sliding operation passes through an area in which the partial content of the first picture in the first area is located and an area in which the partial content of the frame is located; and
in response to the third sliding operation, the electronic device displays, in the area in which the partial content of the first picture in the first area is located, a second doodle trace corresponding to the third sliding operation, and skips displaying, in the area in which the partial content of the frame in the first area is located, a doodle trace corresponding to the third sliding operation.

In this application, when the electronic device displays a partial area of a picture, and the partial area includes a frame part and an image part inside the frame, if a doodle operation passes through the frame part and the image part inside the frame, a doodle trace is generated in the image part inside the frame, and no doodle trace is generated on the frame.

As another implementation of the first aspect of this application, after the electronic device receives the third operation and before the electronic device receives the second operation, the method further includes:
the electronic device displays a first doodle drawing layer on an upper layer of the second picture, where the first doodle drawing layer is used to display the first doodle trace, and a position and a size of the first doodle drawing layer are the same as those of the area corresponding to the content of the first picture in the second picture.

In this application, after the electronic device enables the doodle function, the doodle drawing layer is displayed on an upper layer of a currently displayed picture, the area corresponding to the doodle drawing layer is the currently displayed picture minus the frame area, and the doodle drawing layer is used to display a doodle trace in a doodle process in real time. Because the doodle drawing layer is the content currently displayed in the preview area minus the frame area, a doodle operation in the frame area does not result in generation of a corresponding doodle trace on the doodle drawing layer, and a doodle operation in an area other than the doodle drawing layer results in generation of a corresponding doodle trace on the doodle drawing layer.

As another implementation of the first aspect of this application, the first sliding operation includes: a first touch operation, a first moving operation, and a first lifting operation, where that the electronic device displays, in the area in which the content of the first picture is located, a first doodle trace corresponding to the first sliding operation, and skips displaying, in the area in which the frame is located, a doodle trace corresponding to the first sliding operation in response to the first sliding operation includes:
in response to the first moving operation, the electronic device displays, on the first doodle drawing layer, the first doodle trace corresponding to the first sliding operation, and skips displaying, in an area outside the first doodle drawing layer, a doodle trace corresponding to the first sliding operation.

In this application, with a moving operation performed by the user on the display, the electronic device may generate a doodle trace in real time on the doodle drawing layer, and does not generate a doodle trace in an area other than the doodle drawing layer.

As another implementation of the first aspect of this application, the method further includes:
the electronic device displays a third picture in response to the first lifting operation, where the third picture includes the content of the first picture, the frame surrounding the content of the first picture, and the first doodle trace in the area in which the content of the first picture is located; and
the electronic device clears the first doodle trace on the first doodle drawing layer.

In this application, after the finger of the user is lifted from the display, it indicates that the current doodle operation ends, and a new view may be generated. A doodle trace corresponding to the doodle operation is generated in an area inside the frame on the new view, and no doodle trace corresponding to the doodle operation is generated on the frame. After the electronic device displays the new view, the doodle trace on the doodle drawing layer can be cleared.

As another implementation of the first aspect of this application, after the electronic device displays the third operation, the method further includes:
the electronic device receives a sixth operation, where the sixth operation is used for triggering the electronic device to display a first area of the third picture;
the electronic device displays the first area of the third picture in response to the sixth operation; and
the electronic device displays a second doodle drawing layer on an upper layer of the first area of the third picture, where the second doodle drawing layer is used to display a second doodle trace, and a position and a size of the second doodle drawing layer are the same as those of an area corresponding to content of the first picture in the first area of the third picture.

As another implementation of the first aspect of this application, the method further includes:
the electronic device receives a third sliding operation, where the third sliding operation includes: a second contact operation, a second moving operation, and a second lifting operation;
in response to the second moving operation, the electronic device displays, on the second doodle drawing layer, a second doodle trace corresponding to the third sliding operation, and skips displaying, in an area outside the second doodle drawing layer, a doodle trace corresponding to the third sliding operation;
the electronic device displays a first area of a fourth picture in response to the second lifting operation, where the fourth picture includes the content of the first picture, the frame surrounding the content of the first picture, and the first doodle trace and the second doodle trace in the area in which the content of the first picture is located; and
the electronic device clears the second doodle trace on the second doodle drawing layer.

As another implementation of the first aspect of this application, before the electronic device displays the second doodle drawing layer on the upper layer of the first area of the third picture, the method further includes:
the electronic device obtains a first position of the first area on the third picture;
the electronic device obtains a second position of the content of the first picture on the third picture;
the electronic device calculates an area in which the first position of the first area on the third picture overlaps the second position of the content of the first picture on the third picture, to obtain a third position of the doodle drawing layer on the third picture;
the electronic device obtains a fourth position of the doodle drawing layer on the first area based on the first position of the first area on the third picture and the third position of the doodle drawing layer on the third picture;
the electronic device obtains a fifth position of the first area on a display of the electronic device; and
the electronic device obtains a sixth position of the doodle drawing layer on the display based on the fourth position of the doodle drawing layer on the first area and the fifth position of the first area on the display.

As another implementation of the first aspect of this application, that the electronic device displays the second doodle drawing layer on the upper layer of the first area of the third picture includes:
the electronic device displays the second doodle drawing layer on the upper layer of the first area of the third picture based on the sixth position of the doodle drawing layer on the display.

As another implementation of the first aspect of this application, after the sixth position of the doodle drawing layer on the display is obtained, the method further includes:
the electronic device obtains a seventh position of the doodle drawing layer on the first picture based on the second position of the first picture on the third picture and the third position of the doodle drawing layer on the third picture;
the electronic device obtains a first mapping relationship between coordinates on the display and coordinates on the first picture based on the seventh position of the doodle drawing layer on the first picture and the sixth position of the doodle drawing layer on the display; and
the electronic device obtains a second mapping relationship between coordinates on the first picture and coordinates on the doodle drawing layer based on the seventh position of the doodle drawing layer on the first picture.

As another implementation of the first aspect of this application, the second moving operation carries first coordinates of a finger of the user on the display. That the electronic device displays, on the second doodle drawing layer, a second doodle trace corresponding to the third sliding operation, and skips displaying, in an area outside the second doodle drawing layer, a doodle trace corresponding to the third sliding operation in response to the second moving operation includes:
in response to the second moving operation, the electronic device maps the first coordinates of the finger of the user on the display to second coordinates of the finger of the user on the first picture based on the first mapping relationship;
the electronic device maps the second coordinates of the finger of the user on the first picture to third coordinates of the finger of the user on the doodle drawing layer based on the second mapping relationship; and
the electronic device displays, on the second doodle drawing layer based on the third coordinates of the finger of the user on the doodle drawing layer, the second doodle trace corresponding to the third sliding operation.

As another implementation of the first aspect of this application, the method further includes:
the electronic device stores a unique identifier of the frame corresponding to the first control;
the electronic device stores fourth coordinates of the first doodle trace on the first picture; and
the electronic device stores second coordinates of the second doodle trace on the first picture, where second coordinates of the second doodle trace on the second picture include second coordinates of the finger of the user on the second picture in the third sliding operation.

As another implementation of the first aspect of this application, that the electronic device displays a first area of a fourth picture in response to the second lifting operation includes:
the electronic device obtains an editing record of the first picture in response to the second lifting operation, where the editing record of the first picture includes: the unique identifier of the frame, the fourth coordinates of the first doodle trace on the first picture, and the second coordinates of the second doodle trace on the first picture;
the electronic device generates the first doodle trace and the second doodle trace on the first picture based on the fourth coordinates of the first doodle trace on the first picture and the second coordinates of the second doodle trace on the first picture;
the electronic device adds, based on the unique identifier of the frame, the frame to the first picture on which the first doodle trace and the second doodle trace are generated, to obtain the fourth picture; and
the electronic device displays the first area of the fourth picture based on the position of the first area on the third picture.

According to a second aspect, an electronic device is provided. The electronic device includes a processor, and the processor is configured to run a computer program stored in a memory, to implement the method in any implementation of the first aspect of this application.

According to a third aspect, a chip system is provided. The chip system includes a processor, the processor is coupled to a memory, and the processor executes a computer program stored in the memory, to implement the method in any implementation of the first aspect of this application.

According to a fourth aspect, a computer-readable storage medium is provided. The computer-readable storage medium stores a computer program, and when executed by one or more processors, the computer program implements the method in any implementation of the first aspect of this application.

According to a fifth aspect, this application provides a computer program product, and when the computer program product is run on an electronic device, the device is enabled to perform the method in any implementation of the first aspect of this application.

It may be understood that, for beneficial effects of the second aspect to the fifth aspect, refer to the relevant description in the first aspect. Details are not described herein again.

### BRIEF DESCRIPTION OF DRAWINGS

FIG. 1 is a schematic diagram of a hardware structure of an electronic device according to an embodiment of this application;
FIG. 2 is a schematic diagram of interface changes during a frame adding operation on a picture according to an embodiment of this application;
FIG. 3 is a schematic diagram of interface changes when doodle is performed on a view on which a frame is added according to an embodiment of this application;
FIG. 4 is another schematic diagram of interface changes when doodle is performed on a view on which a frame is added according to an embodiment of this application;
FIG. 5 is a schematic diagram of a relationship between layers in a picture editing method according to an embodiment of this application;
FIG. 6 is a schematic diagram of a relationship between layers related to scenarios shown in FIG. 2 to FIG. 4 in the layers shown in FIG. 5;
FIG. 7 is a schematic diagram of a position relationship between a view in an interface shown in (d) in FIG. 3 and a doodle drawing layer;
FIG. 8 shows a relationship between layers displayed in a preview area in a doodle process shown in (d) in FIG. 3;
FIG. 9 shows a relationship between layers when view 1-2 is generated after a doodle operation ends as shown in (d) in FIG. 3;
FIG. 10 is a schematic diagram of a position relationship between a view in an interface shown in (d) in FIG. 4 and a doodle drawing layer;
FIG. 11 shows a relationship between layers displayed in a preview area in a doodle process shown in (d) in FIG. 4;
FIG. 12 shows a relationship between layers when view 1-3 is generated after a doodle operation ends as shown in (d) in FIG. 4;
FIG. 13 is a technical architecture diagram of a gallery application according to an embodiment of this application;
FIG. 14 is a technical architecture diagram of a doodle module in the gallery application shown in FIG. 13 according to an embodiment of this application;
FIG. 15A and FIG. 15B are a time sequence diagram of a picture editing method according to an embodiment of this application;
FIG. 16 is a diagram of a position relationship between an area corresponding to view 1-2, an area corresponding to content of view 1-0, an area corresponding to a display, an area corresponding to content displayed in a preview area, and an area corresponding to a doodle drawing layer in an interface shown in (c) in FIG. 4 according to an embodiment of this application;
FIG. 17 is a schematic flowchart of calculating a position of an area in which a doodle drawing layer is located on the display, a first mapping relationship, and a second mapping relationship according to an embodiment of this application;
FIG. 18 is a schematic flowchart of calculating a position of an area in which a doodle drawing layer is located on the display, a first mapping relationship, and a second mapping relationship by using an interface shown in (c) in FIG. 4 as an example according to an embodiment of this application;
FIG. 19 is a schematic flowchart of calculating a position of an area in which a doodle drawing layer is located on the display, a first mapping relationship, and a second mapping relationship by using an interface shown in (c) in FIG. 3 as an example according to an embodiment of this application;
FIG. 20A and FIG. 20B are a time sequence diagram of displaying a doodle trace by a doodle module according to an embodiment of this application;
FIG. 21 is an effect diagram of drawing a doodle trace in another picture editing method according to an embodiment of this application;
FIG. 22 is a technical architecture diagram of an editing module according to an embodiment of this application; and
FIG. 23 is a schematic flowchart of a picture editing method according to an embodiment of this application.

### DESCRIPTION OF EMBODIMENTS

In the following description, for illustration instead of limitation, specific details such as a specific system structure and technology are provided, so as to thoroughly understand embodiments of this application. However, a person skilled in the art should understand that this application may also be implemented in other embodiments without these specific details.

It should be understood that when used in the specification and the appended claims of this application, the term "include" indicates the presence of described features, entireties, steps, operations, elements and/or components, but does not rule out one or more other features, entireties, steps, operations, elements, components and/or sets thereof.

It should be further understood that, in embodiments of this application, "one or more" means one, two or more; and "and/or" describes an association relationship between associated objects and represents that three relationships may exist. For example, A and/or B may represent: only A exists, both A and B exist, and only B exists, where A and B may be singular or plural. The character "/" generally indicates an "or" relationship between the associated objects.

In addition, in the description of the specification and the appended claims of this application, terms "first", "second", "third", and "fourth" are only used for a purpose of distinguishing descriptions and cannot be understood as indicating or implying relative importance.

Reference to "an embodiment", "some embodiments", or the like described in the specification of this application indicates that one or more embodiments of this application include a specific feature, structure, or characteristic described with reference to those embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The picture editing method provided in the embodiments of this application may be applied to an electronic device such as a large-screen device, a tablet computer, a mobile phone, a notebook computer, an ultra-mobile personal computer (ultra-mobile personal computer, UMPC), a netbook, a personal digital assistant (personal digital assistant, PDA), and the like. This embodiment of this application does not limit a specific type of the electronic device.

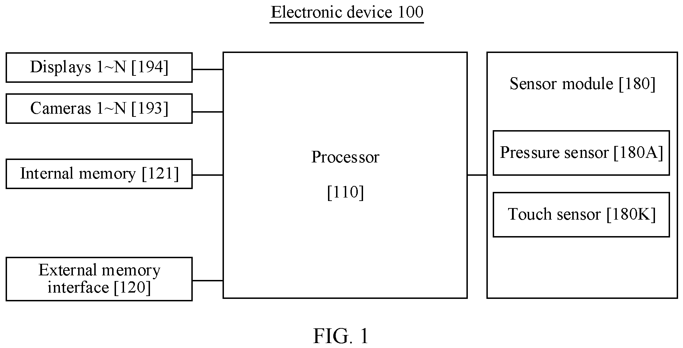

FIG. 1 is a schematic diagram of a structure of an electronic device. The electronic device 100 may include: a processor 110, an external memory interface 120, an internal memory 121, a sensor module 180, a camera 193, and a display 194. The sensor module 180 may include a pressure sensor 180A, a touch sensor 180K, and the like.

It may be understood that the structure shown in this embodiment of this application does not constitute a specific limitation on the electronic device 100. In other embodiments of this application, the electronic device 100 may include more or fewer components than those shown in the figure, or some components may be combined, or some components may be split, or components are arranged in different manners. The illustrated components may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store an instruction or data that has been used or cyclically used by the processor 110. If the processor 110 needs to use the instruction or the data again, the processor may directly invoke the instruction or the data from the memory, This avoids repeated access, reduces waiting time of the processor 110, and improves system efficiency.

The external memory interface 120 may be configured to connect to an external memory card, for example, a micro SD card, to extend a storage capability of the electronic device 100. The external memory card communicates with the processor 110 through the external memory interface 120, to implement a data storage function. For example, files such as music and a video are stored in the external memory card.

The internal memory 121 may be configured to store computer-executable program code, where the computer-executable program code includes instructions. The processor 110 runs the instructions stored in the internal memory 121, to implement various functional applications and data processing of the electronic device 100. The internal memory 121 may include a program storage area and a data storage area. The program storage area may store an operating system, an application (for example, a sound playback function or an image playback function) required by at least one function, and the like.

In addition, the internal memory 121 may include a high-speed random access memory, or may include a non-volatile memory such as at least one magnetic disk memory, a flash memory, or a universal flash storage (universal flash storage, UFS).

The pressure sensor 180A is configured to sense a pressure signal, and can convert the pressure signal into an electrical signal. In some embodiments, the pressure sensor 180A may be disposed on the display 194. There are many types of pressure sensors 180A, such as a resistive pressure sensor, an inductive pressure sensor, and a capacitive pressure sensor. The capacitive pressure sensor may include at least two parallel plates made of conductive materials. When force is exerted on the pressure sensor 180A, capacitance between electrodes changes. The electronic device 100 determines strength of the pressure based on the change of the capacitance. When a touch operation is performed on the display screen 194, the electronic device 100 detects strength of the touch operation by using the pressure sensor 180A. The electronic device 100 may calculate a touch position based on a detected signal of the pressure sensor 180A.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may alternatively be disposed on a surface of the electronic device 100 at a position different from a position of the display 194.

The electronic device 100 implements a display function by using the GPU, the display 194, the application processor, and the like. The GPU is a microprocessor for image processing, and connects the display 194 and the application processor. The GPU is configured to perform mathematical and geometrical calculation, and is configured to perform graphics rendering. The processor 110 may include one or more GPUs that execute program instructions to generate or change display information.

The display 194 is configured to display an image, a video, and the like. In some embodiments, the electronic device 100 may include one or N displays 194, where N is a positive integer greater than 1.

The camera 193 is configured to capture a static image or a video. In some embodiments, the electronic device 100 may include one or N cameras 193, where N is a positive integer greater than 1.

Embodiments of this application do not specifically limit a specific structure of an execution body of the picture editing method, as long as code of the picture editing method of embodiments of this application can be run to perform processing according to the picture editing method provided in embodiments of this application. For example, the execution body of the image editing method provided in embodiments of this application may be a functional module that can invoke a program and execute the program in an electronic device, or is a processing apparatus applied to an electronic device, for example, a chip.

Before embodiments of this application are described, a definition of a view subsequently used in embodiments of this application are first described. A view of a picture is content obtained after content of the picture itself and an editing effect corresponding to an editing operation are superimposed. The superimposed content has not been saved as a genuine picture in a gallery, and merely serves as a preview in a picture editing process, showcasing a result of each editing action performed on the picture.

For example, in an editing process of the picture, before the first editing operation, a preview area of an interface of the electronic device displays an original view of the picture, and content of the original view is content of the picture. In a process of the first editing operation, an editing effect of the first editing operation is presented at an upper layer of the original view. After the first editing operation ends, the electronic device generates a view obtained after the first editing operation based on the content of the picture and the editing effect of the first editing operation. The view obtained after the first editing operation is used to display a preview effect after the first editing operation is performed on the picture.

Before a non-first editing operation, the preview area of the interface of the electronic device displays a view obtained after a previous editing operation. In a process of the non-first editing operation, the electronic device presents, at an upper layer of the view obtained after the previous editing operation, an editing effect of the current editing operation. After the current editing operation ends, the electronic device generates a view obtained after the current editing operation based on the content of the picture and editing effects of all present editing operations. The view obtained after the current editing operation is used to display a preview effect after all the present editing operations are performed on the picture.

After the last editing operation ends, an edited picture may be generated based on a view obtained after the last editing operation, and the edited picture may be saved in the gallery as a genuine picture.

It may be understood from the foregoing content that, in a picture editing process, a view is presentation of a preview effect in the picture editing process, and when the preview area of the electronic device displays the view, the view itself may be displayed, or a thumbnail of the view may be displayed. This is not limited in embodiments of this application.

The electronic device may provide picture editing functions, for example, editing and processing functions such as Crop, Filter, Doodle, Mosaic, and Frame. A user may perform one or more of the foregoing editing processes on a picture by using the electronic device.

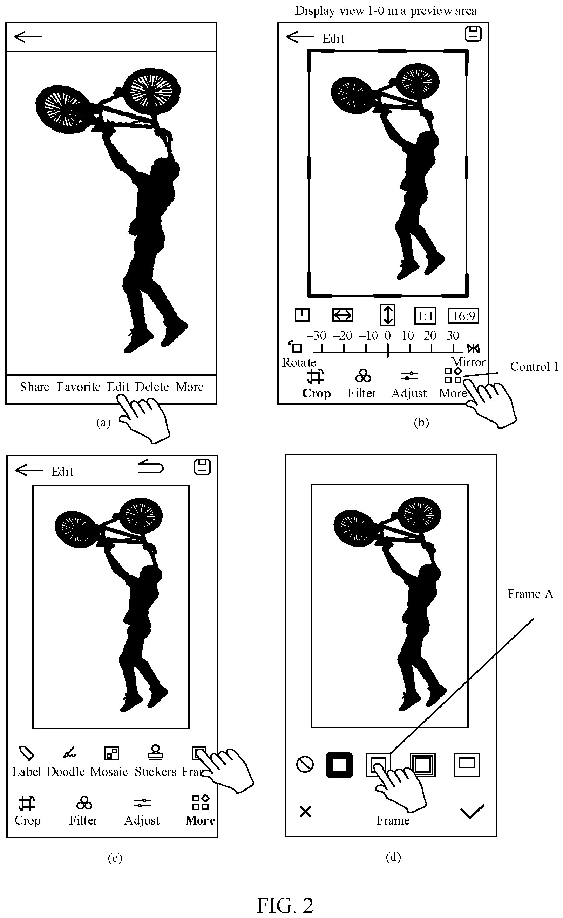

As an example, refer to (a) in FIG. 2. The user selects a picture (for example, picture 1) from a gallery, and taps an edit control on a preview interface of the picture. After receiving the tap operation on the edit control, the electronic device displays a main interface of a picture editing application shown in (b) in FIG. 2, that is, an interface corresponding to the Crop function. A view displayed in a preview area of the interface corresponding to the Crop function is original view 1-0 of picture 1 (picture 1 itself) and a Crop frame (a discontinuous bold frame that surrounds view 1-0). The user taps control 1 on the interface shown in (b) in FIG. 2. After receiving the tap operation on the control 1, the electronic device displays an interface shown in (c) in FIG. 2. View 1-0 is also displayed on the interface shown in (c) in FIG. 2. The interface shown in (c) in FIG. 2 further displays controls that are respectively corresponding to a plurality of editing functions, such as Label, Doodle, Mosaic, Stickers, Frame, Crop, Filter, and Adjust. The user taps a Frame control in the interface shown in (c) in FIG. 2. After receiving the tap operation on the frame control, the electronic device displays an interface corresponding to the Frame function shown in (d) in FIG. 2. View 1-0 of picture 1 is still displayed on the interface.

It should be noted that (a) in FIG. 2 to (c) in FIG. 2 are merely examples of triggering the electronic device to display the interface corresponding to the Frame function, and set no limitation on this application.

Refer to the interface corresponding to the Frame function shown in (d) in FIG. 2. There is a no-frame control and controls that are respectively corresponding to a plurality of frame types in the interface. The user can select a frame type to add a corresponding frame to the original view at this frame operation.

When the user first performs an operation of adding a frame to picture 1, the operation of adding a frame acts on the original view 1-0. When the user performs another operation (for example, a crop operation) on picture 1 and then adds a frame, the operation of adding a frame acts on a view (for example, a cropped view) obtained after the another operation is performed on picture 1.

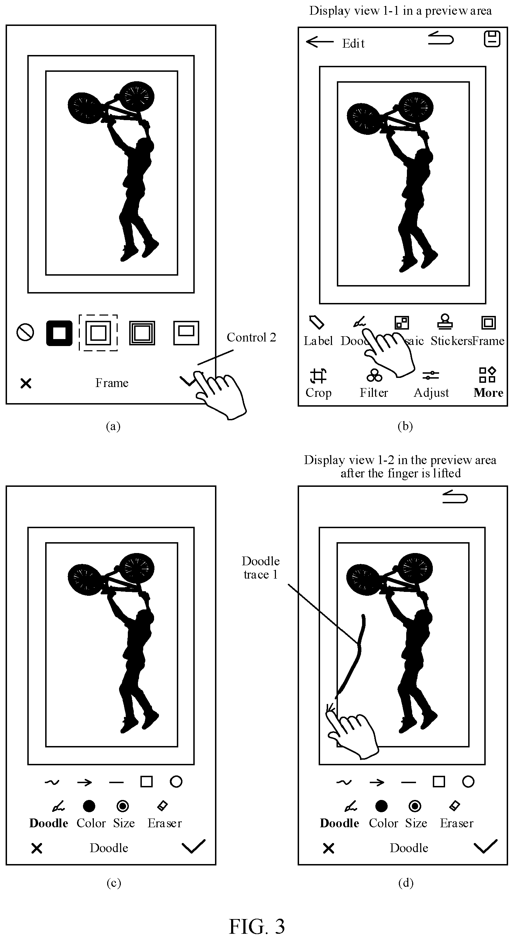

The user continues to tap a control corresponding to a frame type (for example, frame A) in the interface shown in (d) in FIG. 2. After receiving the operation of selecting frame A, the electronic device displays an interface shown in (a) in FIG. 3. Content displayed on the interface is view 1-0 and frame A.

After adding frame A to view 1-0, the user taps control 2 on the interface shown in (a) in FIG. 3. After receiving the tap operation on control 2, the electronic device displays an interface shown in (b) in FIG. 3, and the interface displays view 1-1. View 1-1 is a view generated after frame A is added to view 1-0. From a user's perspective, content displayed in (a) in FIG. 3 is the same as that displayed in (b) in FIG. 3.

The interface shown in (b) in FIG. 3 also includes controls that are respectively corresponding to a plurality of editing functions, for example, Label, Doodle, Mosaic, Stickers, Frame, Crop, Filter, and Adjust. The user taps the Doodle control on the interface to perform doodling on view 1-1. After receiving the operation on the Doodle control on the interface shown in (b) in FIG. 3, the electronic device displays the interface shown in (c) in FIG. 3.

The interface shown in (c) in FIG. 3 is an interface corresponding to a doodle function, and the interface corresponding to the doodle function includes doodle line controls, for example, a free line, an arrow line, a straight line, a square box, and a circular box. The user may select any doodle line type based on an actual requirement of the user.

The interface corresponding to the doodle function shown in (c) in FIG. 3 may further include a doodle color control, a doodle line size control, and an eraser control.

The doodle function is configured with a default initial doodle color, an initial doodle line type, an initial line size, and the like. The user can use a default initial doodle parameter to draw doodle traces on the view of the preview area. The user may change a doodle color, a line size, a doodle line type, or the like based on an actual requirement of the user, or may erase a drawn doodle trace or the like by using an eraser.

Refer to (d) in FIG. 3. (d) in FIG. 3 is a schematic diagram of content displayed in the preview area after the user enters a doodle operation in the preview area. The doodle operation performed by a finger of the user passes through an image area inside the frame, and further passes through an area corresponding to the frame (for example, a dotted line marked with an arrow in the preview area is a sliding direction of the finger of the user). Correspondingly, a doodle trace (for example, black doodle trace 1) corresponding to the doodle operation is generated in the image area inside the frame. However, no doodle trace corresponding to the doodle operation is generated in the area corresponding to the frame (for example, no black doodle trace is generated in a position corresponding to the dotted line).

After the doodle operation ends, content displayed in the preview area of the interface shown in (d) in FIG. 3 is view 1-2, that is, a view obtained after doodle trace 1 shown in (d) in FIG. 3 is added to view 1-1, or may be understood as a view obtained after doodle trace 1 and frame A are added to view 1-0.

The doodle function may further provide a zoom-in display function, that is, a local area of the currently displayed view is displayed after the currently displayed view is magnified.

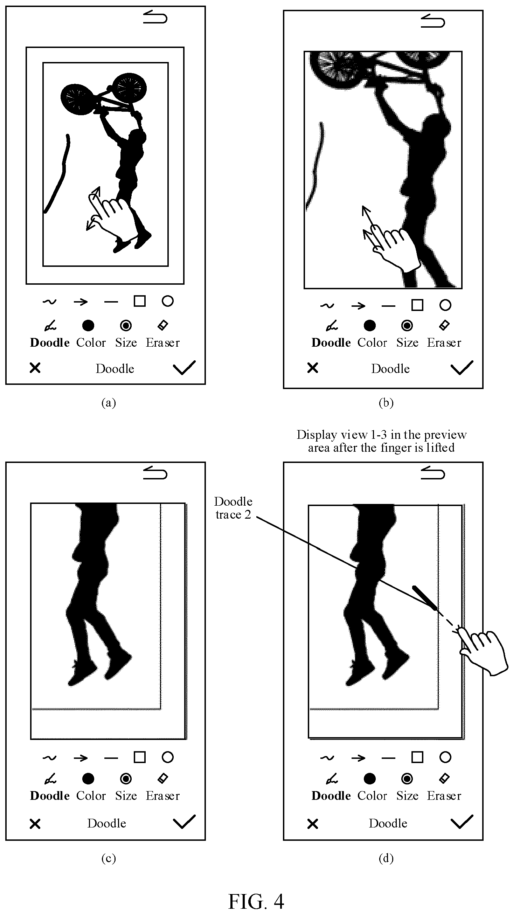

Refer to the gesture operation on the interface shown in (a) in FIG. 4. The user may trigger, by using an operation of moving two fingers away from each other in the preview area, zoom-in display of the currently displayed view in the preview area of the electronic device, to obtain the interface shown in (b) in FIG. 4. The local area of view 1-2 is displayed in the preview area of the interface.

Refer to (b) in FIG. 4. The user may trigger, through an operation of sliding two fingers in the preview area, view 1-2 displayed in the preview area of the electronic device to move, to obtain an interface shown in (c) in FIG. 4.

The user may continue to doodle on the interface shown in (c) in FIG. 4. Refer to a doodle operation shown in (d) in FIG. 4 (for example, a dotted line marked with an arrow in the preview area is a sliding direction of the finger of the user). When the doodle operation passes through an image area inside the frame in the local area of the currently displayed view 1-2, a corresponding doodle trace (for example, black doodle trace 2) is generated. When the doodle operation passes through the frame area in the local area of the currently displayed view 1-2, no corresponding doodle trace is generated (for example, no doodle trace is generated at a position corresponding to the dotted line).

After the doodle is finished this time, the local area of view 1-3 is displayed on the interface corresponding to the Doodle function. View 1-3 is a view in which doodle trace 2 is added to view 1-2, or may be understood as a view in which doodle trace 1 and doodle trace 2 are added to view 1-1, or may be understood as a view in which doodle trace 1, doodle trace 2, and frame A are added to view 1-0.

It may be understood that in the picture editing method provided in this embodiment of this application, if an operation of adding a frame is first performed on a picture before a doodle operation, during the doodle operation, if the doodle operation passes through an area corresponding to an image inside the frame and a frame area, a doodle trace corresponding to the doodle operation is generated in the area corresponding to the image inside the frame, and no doodle trace corresponding to the doodle operation is generated in the frame area.

In this embodiment of this application, content displayed in the preview area of the interface shown in FIG. 2 to FIG. 4 may be different. The content may be presented in a form of layers.

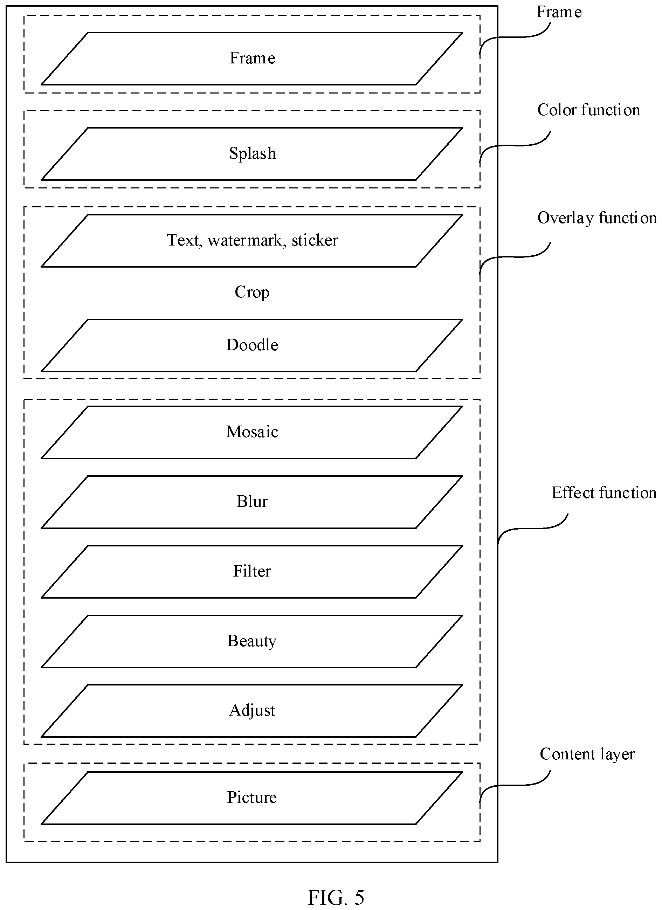

Refer to FIG. 5. FIG. 5 shows logical layers in the picture editing process according to an embodiment of this application.

The logical layers may include a content layer, an effect function, an overlay function, a color function, and a frame from bottom to top. Crop may be located between the overlay function and the effect function, or may be located below Text, watermark and sticker in the overlay function and above Doodle (as shown in FIG. 5). Certainly, Crop may alternatively be located below Watermark and above Text, sticker and doodle. That is, in this embodiment of this application, a specific position of Crop in the logical layers may be set based on an actual requirement.

The frame is displayed independently on the periphery of the image.

The color function may include Splash, and the color function acts on colored content in a picture.

The overlay function may include Text, watermark and sticker, and Doodle. An upper-lower layer sequence of layers in the overlay function may be adjusted based on an actual situation. For example, Text, Watermark, Sticker, and Doodle may be respectively located on four layers.

The effect function may include Mosaic, Blur, Filter, Beauty, and Adjust.

The content layer may include a picture itself or another view of the picture.

In actual application, a sequence of the layers shown in FIG. 5 is not uniquely determined, or the sequence of the layers may be changed based on an actual situation, or a corresponding layer is deployed based on a function provided by a picture editing application of an electronic device.

In this embodiment of this application, to generate a view obtained after each editing operation, an editing operation record in a current picture editing process is first obtained. Then, based on the layer sequence shown in FIG. 5, editing effects of operation records corresponding to the layers are successively superimposed on the original picture from a lower layer to an upper layer. Finally, a view obtained after the current editing operation may be obtained. The view obtained after the current editing operation can be used as an original view of a next editing operation.

Content displayed in the preview area of the interface shown in FIG. 2 to FIG. 4 relates to one or more layers of a content layer, a doodle drawing layer, and a frame layer.

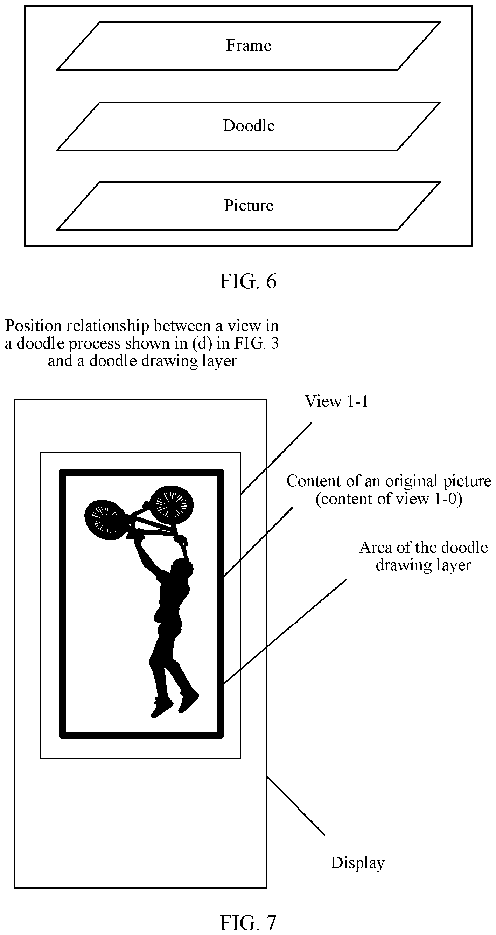

Refer to FIG. 6. FIG. 6 is a diagram of a position relationship between a content layer (picture), a doodle drawing layer (doodle), and a frame layer (frame) according to an embodiment of this application. The content layer is located at the lowest layer, the doodle drawing layer is located at an upper layer of the content layer, and the frame layer is located at an upper layer of the doodle drawing layer. In the scenarios shown in FIG. 2 to FIG. 4, in a process of calculating a view obtained after an editing operation, editing effects corresponding to operation records (an operation record of the current editing operation and an operation record obtained before the current editing operation) are successively superimposed from bottom to top based on a layer relationship shown in FIG. 6, to obtain the view after the current editing operation.

Refer to FIG. 7. In the doodle process shown in (d) in FIG. 3, to implement a process in which a doodle trace takes effect in real time, it may be set that a content layer and a doodle drawing layer are displayed in the preview area of the interface shown in (d) in FIG. 3 in the doodle process. A position and a size of the doodle drawing layer are the same as those of the content of view 1-0 in the currently displayed view 1-1.

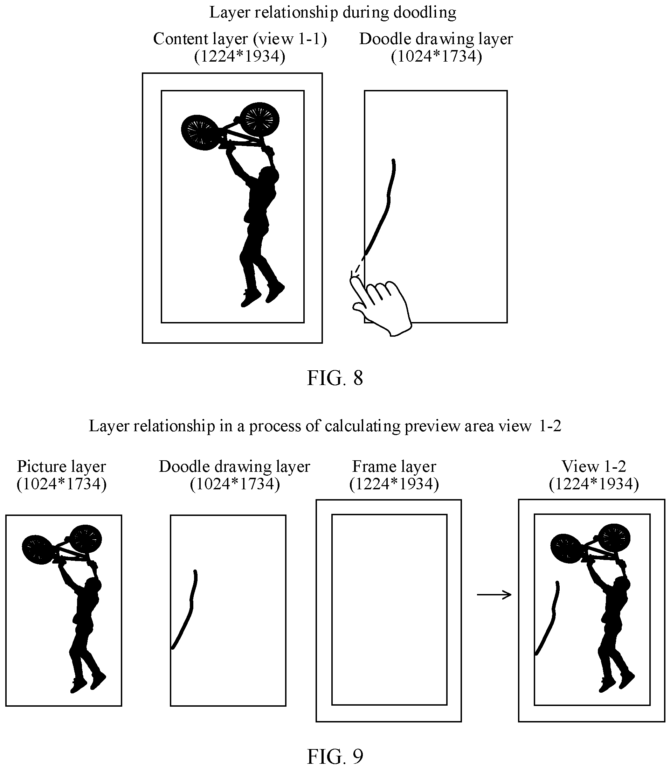

Refer to FIG. 8. In a doodle process, a content layer is a view obtained after a previous editing operation ends. The view is view 1-1 obtained after a frame is added to the original picture after a frame adding operation is completed. Therefore, the size of the content layer is the size of view 1-1 obtained after the frame is added, for example, 1224*1934. A size of the original picture (view 1-0) inside the frame is: 1024*1734.

In a doodle process, a size of a doodle drawing layer is a size of content in the preview area minus an area of the frame. Refer to FIG. 7. A size of the doodle drawing layer is a size of view 1-1 minus a size of the frame part, that is, a size of the original picture (view 1-0): 1024*1734.

A doodle trace may be drawn on the doodle drawing layer as a doodle operation performed by the user. For example, when a finger of the user slides to a position shown in FIG. 8, the doodle trace takes effect on the doodle drawing layer in real time, and does not take effect in an area outside the doodle drawing layer. Because the doodle drawing layer is located above the content layer, from the user's perspective, it seems as if it is drawn on view 1-1 corresponding to the content layer. Because the size and the position of the doodle drawing layer correspond to the size and the position corresponding to the original picture (view 1-0) in view 1-1, a corresponding doodle trace is generated on the doodle drawing layer based on a doodle operation in an area corresponding to the doodle drawing layer on the display, and a corresponding doodle trace cannot be generated on the doodle drawing layer based on a doodle operation in an area (for example, a frame area) outside the area corresponding to the doodle drawing layer on the display.

After the doodle operation ends (after the finger of the user is lifted in the interface shown in (d) in FIG. 3), view 1-2 is generated based on the current doodle operation.

To generate a view, all operation records in the current picture editing process may be successively added to the original picture in a sequence from a lower layer to an upper layer in the layer relationship.

It may be understood from the schematic diagrams of the interfaces shown in FIG. 2 to FIG. 3 that the operation records in this picture editing process include: an operation of add frame A and an operation of drawing doodle trace 1. Therefore, the logical layers involved include: the content layer, the doodle drawing layer, and the frame layer.

As an example of calculating view 1-2 obtained after the doodle operation in the interface shown in (d) in FIG. 3, as shown in FIG. 9, when view 1-2 is being calculated, the content layer is the original picture (view 1-0) with a size of 1024*1734, and the operation record corresponding to the doodle operation is coordinates of the doodle trace relative to the original picture (certainly, may further include a doodle color, a doodle line size, and the like). Therefore, the doodle drawing layer is equivalent to the size of the original picture, that is, the size is also 1024*1734.An operation record corresponding to the operation of adding a frame is a unique identifier of frame A. The frame is generally added to the outermost circle of the picture. Therefore, a size of the frame layer is greater than the size of the original view 1-0, and may be, for example, 1224* 1934 shown in FIG. 9. A size of an inner circle of the frame may be the size of the original view 1-0. The circular width of a frame is related to a size of a view to which the frame is to be added, for example, may be a proportion of the view to which the frame is to be added.

In a sequence from a lower layer to an upper layer, the doodle drawing layer (coordinates of doodle trace 1 relative to the original picture) is first added to the original picture corresponding to the content layer, and then the frame layer (frame A) is added to the original picture on which the doodle drawing layer has been added, to obtain view 1-2.

It may be understood that, when the view is being generated, the size of the doodle drawing layer is the size of the original picture (the coordinates of doodle trace 1 relative to the original picture). Therefore, when the doodle trace on the doodle drawing layer is drawn on the original picture, the doodle trace does not exceed the area of the original picture, and after the frame is added, no doodle trace exists on the frame.

As described above, the view currently displayed in the preview area may be zoomed in before a doodle trace is drawn. The doodle operation corresponding to the interface shown in (d) in FIG. 4 is used as an example.

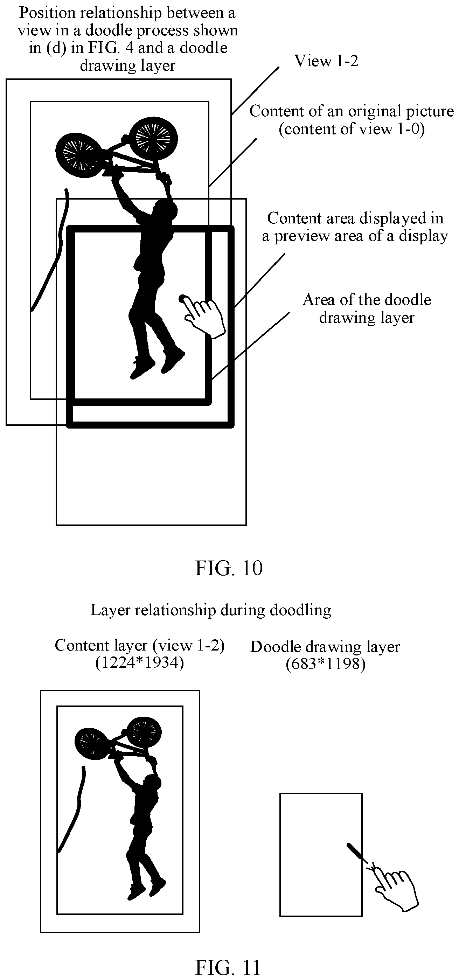

Refer to FIG. 10. In the doodle process shown in (d) in FIG. 4, to implement a process in which a doodle trace takes effect in real time, it may be set that a content layer and a doodle drawing layer are displayed in the preview area of the interface shown in (d) in FIG. 4 in the doodle process. A position and a size of the doodle drawing layer are a position and a size of a part of view 1-2 currently displayed in the preview area minus the area of the frame.

Refer to FIG. 11. In a doodle process, a content layer is a view obtained after a previous editing operation ends. The view is view 1-2 obtained after the operation of adding a frame and the operation of adding doodle trace 1 are completed, and a size of view 1-2 is the same as that of view 1-1. Therefore, the size of the content layer is: 1224*1934, where the size of the original picture (view 1-0) inside the frame is: 1024*1734.

As shown in (d) in FIG. 4, the preview area displays a part of view 1-2, and the size of the doodle drawing layer is a size of content displayed in the preview area minus the frame area. Therefore, the size of the doodle drawing layer is smaller than that of the doodle drawing layer in the previous embodiment. Refer to the sizes of the doodle drawing layers shown in FIG. 10 and FIG. 11. The size of the doodle drawing layer is: 683*1198.

A doodle trace may be drawn on the doodle drawing layer as a doodle operation performed by the user. For example, when a finger of the user slides to a position shown in FIG. 11, the doodle trace takes effect on the doodle drawing layer in real time, and does not take effect in an area outside the doodle drawing layer. Because the doodle drawing layer is located above the content layer, from the user's perspective, it seems as if it is drawn on view 1-2 corresponding to the content layer. Because the size and the position of the doodle drawing layer are determined, a corresponding doodle trace is generated on the doodle drawing layer based on a doodle operation in an area corresponding to the doodle drawing layer on the display, and a corresponding doodle trace cannot be generated on the doodle drawing layer based on a doodle operation in an area (for example, a frame area) outside the area corresponding to the doodle drawing layer on the display.

After the doodle operation ends (after the finger of the user is lifted in the interface shown in (d) in FIG. 4), view 1-3 is generated based on the current doodle operation.

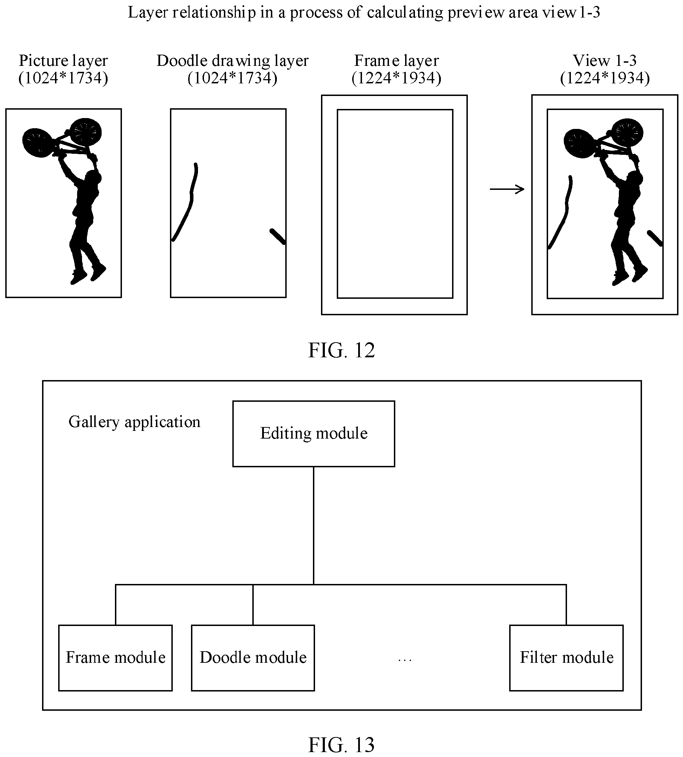

As shown in FIG. 12, operation records in this picture editing process include: an operation of adding frame A, an operation of drawing doodle trace 1, and an operation of drawing doodle trace 2. Involved logical layers include: the content layer, the doodle drawing layer, and the frame layer.

As an example of calculating view 1-3 obtained after the doodle operation in the interface shown in (d) in FIG. 4 is completed, when view 1-3 is being calculated, the content layer is the original picture (view 1-0) with a size of 1024*1734, and the operation record corresponding to the doodle drawing layer is coordinates of doodle trace 1 and doodle trace 2 respectively relative to the original picture. Therefore, the doodle drawing layer is equivalent to the size of the original picture, that is, the size is also 1024*1734. Therefore, a size of the frame layer is greater than the size of the original view 1-0, and may be, for example, 1224*1934 shown in FIG. 8. A size of an inner circle of the frame may be the size of the original view 1-0.

In a sequence from a lower layer to an upper layer, the doodle drawing layer (coordinates of doodle trace 1 relative to the original picture and coordinates of doodle trace 2 relative to the original picture) is first added to the original picture, and then the frame layer (frame A) is added to the original picture on which the doodle drawing layer has been added, to obtain view 1-3.

It may be understood that, when the view is being generated, the size of the doodle drawing layer is the size of the original picture (the coordinates of doodle trace 1 and doodle trace 2 relative to the original picture). Therefore, when the doodle trace on the doodle drawing layer is drawn on the original picture, the doodle trace does not exceed the area of the original picture, and after the frame is added, no doodle trace exists on the frame.

After the principle of the picture editing method provided in this embodiment of this application is understood, a specific implementation process in which the doodle trace takes effect on the image inside the frame but does not take effect on the frame during doodling after the frame is added in the scenarios shown in FIG. 2 to FIG. 4 is described in detail.

Refer to FIG. 13. FIG. 13 is a technical architecture diagram of a picture editing function according to an embodiment of this application. The technical architecture diagram shows only modules related to this embodiment of this application. The picture editing function may be set in a gallery application, or may be used as another application independent of the gallery application, for example, a separate picture editing application. In actual application, the technical architecture diagram may further include other modules, which are not shown one by one.

The technical architecture diagram includes an editing module and modules corresponding to various editing functions, for example, a frame module, a doodle module, and a filter module. Certainly, the technical architecture diagram may further include modules corresponding to other editing functions, such as a crop module and a filter module.

As a common module, the editing module may interact with the outside world, may implement, in a picture editing process, calculation of views (views obtained after editing effects are added) of preview areas in interfaces corresponding to different editing functions, and may further store an operation record of each editing operation, for example, a unique identifier of a selected frame, coordinates of a doodle trace relative to an original picture, a color, and a line size.

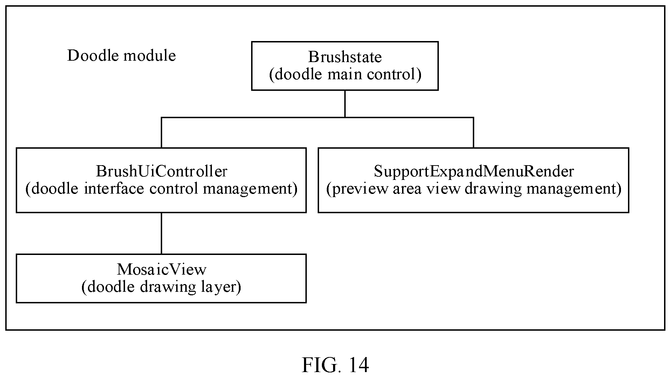

For a doodle module related to this embodiment of this application, refer to a schematic diagram of a technical architecture shown in FIG. 14. Modules corresponding to other editing functions are not described by using examples one by one.

Refer to FIG. 14. FIG. 14 is a technical architecture diagram of a doodle module according to an embodiment of this application.

BrushState (doodle main control) in the doodle module is used to manage a doodle function and interact with the editing module.

BrushUiController (doodle interface control management) in the doodle module is used to manage controls on an interface corresponding to the doodle function.

MosaicView (doodle drawing layer) in the doodle module is used to manage a doodle drawing layer.

SupportExpandMenuRender (preview area view drawing management) in the doodle module is used to manage drawing of a preview area view.

Certainly, in actual application, the doodle module may further include another module. FIG. 14 shows only modules related to a process in which a doodle trace takes effect on an image inside a frame but does not take effect on the frame during a doodle operation on a view to which the frame is added in this application.

After the technical architecture diagram of the picture editing function provided in this embodiment of this application is described, a time sequence diagram of the picture editing method provided in embodiments of this application is described. The time sequence diagram corresponds to the scenarios shown in FIG. 2 to FIG. 4, that is, a process of adding a frame and a process of drawing a doodle are included in a process of editing picture 1. Certainly, another editing processing process may be included before the frame adding process, and another editing processing process may be included after the doodle is drawn. This is not limited in this embodiment of this application.

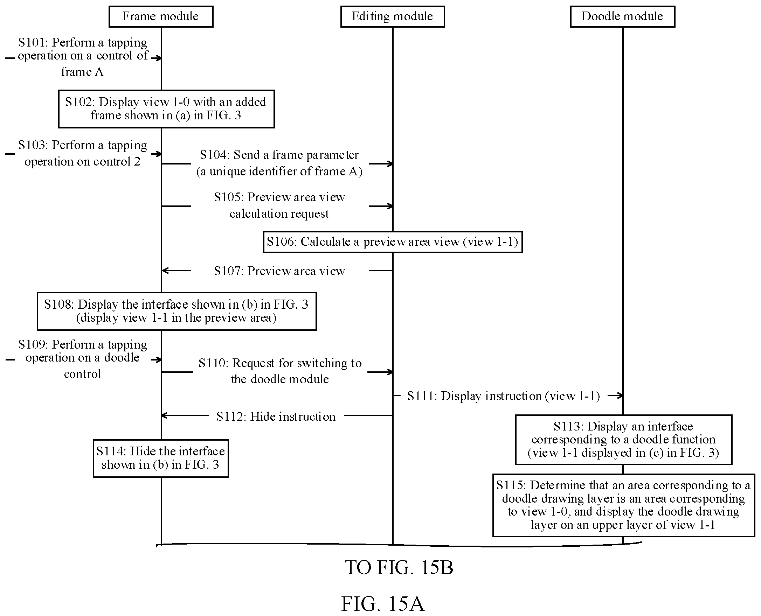

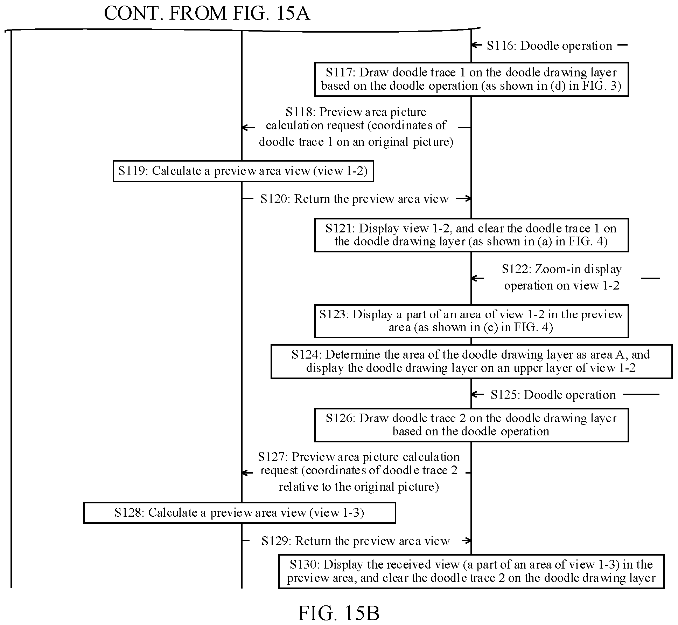

Refer to FIG. 15A and FIG. 15B. FIG. 15A and FIG. 15B are a schematic flowchart of a picture editing method according to an embodiment of this application. The schematic flowchart shown in FIG. 15A and FIG. 15B is a schematic flowchart of performing doodling after frame A is added.

S101: A frame module receives a tap operation on a control of frame A.

In this embodiment of this application, in a process of editing picture 1, various editing operations may be performed on picture 1, and frame adding may be used as the first editing operation in this picture editing process, or frame adding may be used as a non-first editing operation in this picture editing process. Regardless of whether the frame operation is the first editing operation or the non-first editing operation in the current editing process of picture 1, a user operation may be used to trigger an electronic device to display an interface corresponding to a frame function. For details, refer to the interface shown in (d) in FIG. 2. The interface corresponding to the frame function displays an original view (view 1-0) of this frame operation.

When the electronic device displays the interface shown in (d) in FIG. 2, a control corresponding to at least one frame type may be displayed on the interface. For example, the user may tap a corresponding control of frame A, and the frame module receives the tap operation on the control of frame A.

S102: After receiving a selection operation on frame A, the frame module displays, in a preview area of a currently displayed interface, view 1-0 obtained after frame A is added.

Refer to (a) in FIG. 3. (a) in FIG. 3 is a currently displayed interface. The frame module updates display content in the preview area of the currently displayed interface to view 1-0 in which the frame is added.

It should be noted that in this case, frame A and view 1-0 belong to two layers. Therefore, the user may tap the no-frame control on the interface to remove frame A, and trigger the frame module to update the display content in the preview area of the currently displayed interface to view 1-0. Alternatively, a control corresponding to another frame type may be tapped on the interface, and frame A is replaced with another frame, so that the frame module is triggered to update the display content in the preview area of the currently displayed interface to view 1-0 in which another frame is added.

S103: The frame module receives a tap operation on control 2.

In this embodiment of this application, after determining to add frame A to view 1-0, the user may tap control 2 on the interface shown in (a) in FIG. 3, and the electronic device receives the tap operation performed by the user on control 2. Control 2 is used to indicate that current frame adding ends, and the electronic device needs to generate a view based on the currently added frame A and view 1-0.

S104: After receiving the tap operation on control 2, the frame module sends a frame parameter to an editing module.

In this embodiment of this application, the frame parameter may carry a unique identifier of the added frame A. After receiving the frame parameter, the editing module may store the unique identifier of the added frame A.

In specific implementation, after storing the unique identifier of frame A, the editing module may return saving success information to the frame module.

S105: After receiving the tap operation on control 2, or after sending the frame parameter to the editing module, or after receiving the saving success information returned by the editing module, the frame module sends a preview area view calculation request to the editing module.

In this embodiment of this application, as described above, content displayed in the preview area of the interface in step S102 is view 1-0 to which frame A is added. In fact, view 1-0 and frame A are still two layers. However, after the user taps control 2, the two layers at which view 1-0 and frame A are located are updated to one layer, and a view at the updated layer is 1-1. Therefore, the frame module needs to request the editing module to calculate the preview area view to obtain view 1-1.

In this embodiment of this application, the preview area view calculation request may carry the unique identifier of frame A.

In another example, step S104 and step S105 may be combined into one step, or may be separately performed as two steps. This is not limited in this embodiment of this application.

S106: After receiving the preview area view calculation request, the editing module generates a preview area view based on the unique identifier of frame A and view 1-0.

In this embodiment of this application, if frame adding is the first editing operation in this picture editing process of picture 1, when the preview area view is being generated, a current editing operation record includes only an operation of adding the frame, and view 1-1 may be obtained based on the original picture (view 1-0) and frame A corresponding to the unique identifier in the operation of adding the frame.

Certainly, in actual application, if frame adding is not the first editing operation in this picture editing process of picture 1, when the preview area view is being generated, a current editing operation record includes another editing operation and an operation of adding the frame, and view 1-0 may be obtained by adding an editing effect corresponding to the another editing operation to the original picture and then adding frame A to view 1-0 from bottom to top based on a preset layer sequence to obtain view 1-1.

S107: The editing module sends the preview area view obtained through calculation to the frame module.

S108: After receiving the preview area view, the frame module displays an interface shown in (b) in FIG. 3, where the received preview area view (view 1-1) is displayed on the interface.

It should be noted that, from a user's perspective, the content displayed in the preview area of the interface shown in (b) in FIG. 3 and the content displayed in the preview area of the interface shown in (a) in FIG. 3 are the same. However, for the electronic device, the content displayed in the preview area of the interface shown in (a) in FIG. 3 is a view 1-0 layer and a frame layer located at an upper layer of the view 1-0 layer. The content displayed in the preview area of the interface shown in (b) in FIG. 3 is a view 1-1 layer. View 1-1 is a view generated based on view 1-0 and the frame.

After step S108, the electronic device may select another editing function on the interface shown in (b) in FIG. 3 for another editing operation. In this embodiment of this application, that a doodle function is selected is used as an example.

S109: The frame module receives a tap operation on a Doodle control.

In this embodiment of this application, the user needs to tap the Doodle control on the interface shown in (b) in FIG. 3 to trigger the electronic device to display an interface corresponding to the doodle function.

In this embodiment of this application, an operation on an interface that is displayed after an editing function is completed and that includes controls corresponding to more editing functions is responded by a module corresponding to the previous editing function. In actual application, the interface that includes controls corresponding to more editing functions may be displayed after a plurality of editing functions are completed. However, the displayed interface that includes controls corresponding to more editing functions belongs to modules corresponding to different editing functions.

S110: The frame module sends, to the editing module, a request for switching to a doodle module.

S111: After receiving the request for switching to the doodle module, the editing module sends a display instruction to the doodle module.

In actual application, the doodle module displays the interface corresponding to the doodle function according to the display instruction, and the doodle module may send display success information to the editing module after displaying the interface corresponding to the doodle function.

S112: After receiving the request for switching to the doodle module, or after sending the display instruction to the doodle module, or after receiving the display success information sent by the doodle module, the editing module sends a hide instruction to the frame module.

S113: After receiving the display instruction of the editing module, the doodle module displays the interface corresponding to the doodle function, where a preview area of the interface corresponding to the doodle function displays view 1-1.

In this embodiment of this application, when sending the display instruction to the doodle module, the editing module may send the latest cached view 1-1 or a storage address of the latest cached view 1-1 to the doodle module. When the doodle module displays the interface corresponding to the doodle function, view 1-1 can be displayed.

Refer to the interface corresponding to the doodle function shown in (c) in FIG. 3. The view currently displayed on the interface is view 1-1.

S114: After receiving the hide instruction sent by the editing module, the frame module hides the interface shown in (b) in FIG. 3.

In specific implementation, an occasion at which the frame module hides the interface shown in (b) in FIG. 3 may be set to be after the doodle module displays the interface corresponding to the doodle function.

In specific implementation, a module corresponding to each editing function does not directly display an interface, but triggers a display of the electronic device by using another module in the electronic device to display different interfaces.

S115: The doodle module determines that an area corresponding to a doodle drawing layer is an area corresponding to view 1-0 in view 1-1, and displays the doodle drawing layer on an upper layer of view 1-1.

In this embodiment of this application, the preview area on the interface corresponding to the doodle function displayed after the doodle module receives the display instruction generally displays a complete original view (view 1-1) of the current doodle operation. View 1-1 is generated based on view 1-0 and the frame. Therefore, the doodle drawing layer is an area corresponding to view 1-0.

After the doodle drawing layer is determined, the doodle drawing layer may be displayed on the upper layer of view 1-1 displayed in the preview area of the interface corresponding to the doodle function. In this case, there is no doodle trace on the doodle drawing layer. Therefore, it seems as if only view 1-1 is displayed from the user's perspective. For a specific method of determining a position and a size of the doodle drawing layer on the display, refer to the description of the above embodiment. This is not repeated herein.

Certainly, after the position and the size of the doodle drawing layer on the display are determined, a first mapping relationship and a second mapping relationship may be further obtained through calculation, so that the first mapping relationship and the second mapping relationship are used in subsequent steps.

S116: The doodle module receives a doodle operation.

The doodle operation in this embodiment of this application may be a sliding operation of a finger of the user in an area of view 1-1 displayed on a touch screen. In this case, view 1-1 displayed in the preview area includes content of view 1-0 and content of the frame.

S117: The doodle module draws doodle trace 1 on the doodle drawing layer based on the doodle operation.

The user can enter a plurality of doodle operations in one doodle editing process of this picture editing process, for example, enter the Arabic number "1" and then enter the Arabic number "2". Alternatively, doodle trace 1 may be drawn first based on the interface shown in (d) in FIG. 3, and then doodle trace 2 is drawn based on the interface shown in (d) in FIG. 4. From the user's perspective, a process of entering one doodle operation mainly includes the following several processes: The finger of the user touches the touch screen, the finger of the user slides on the touch screen, and the finger of the user leaves the touch screen.

For the electronic device, the following several processes are included: receiving a touch event, receiving a moving event, and receiving a lifting event.

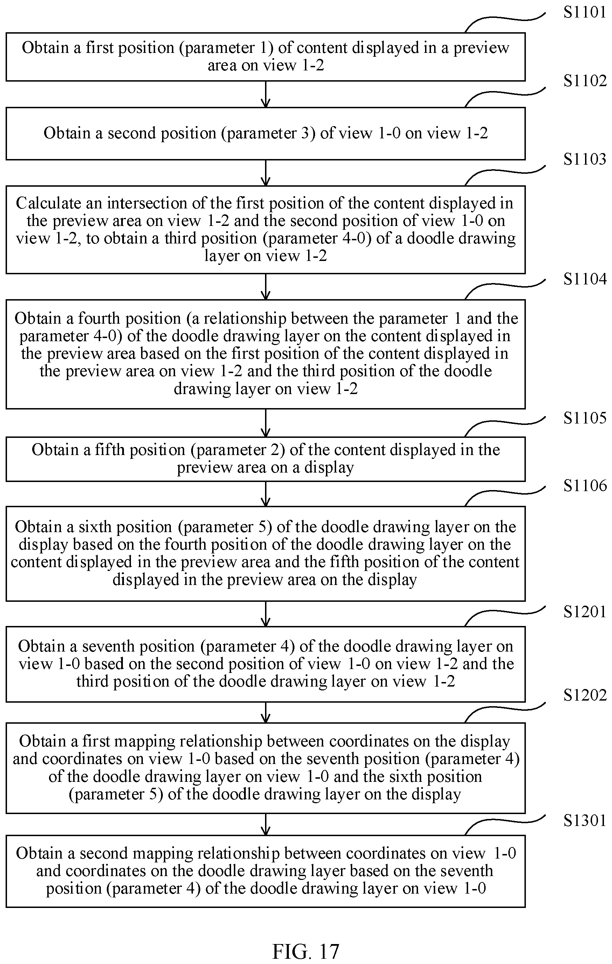

For a detailed process in which the electronic device generates a doodle trace on the doodle drawing layer in real time based on a process in which the finger of the user moves on the touch screen in a doodle operation, refer to the following description of the embodiment shown in FIG. 17.

S118: After the doodle operation ends, the doodle module sends a preview area view calculation request to the editing module.

In this embodiment of this application, a doodle trace is generated in real time based on real-time sliding of a finger of the user in the preview area. A doodle trace corresponding to a sliding process of the user (from a moment when the finger of the user touches the touch screen to a moment when the finger of the user leaves the touch screen) is actually drawn on the doodle drawing layer. After the finger of the user leaves the touch screen, the electronic device needs to generate a view to which a doodle trace is added, and clear the doodle trace on the doodle drawing layer. Therefore, after receiving information about the end of the doodle operation (the finger leaves the touch screen), the doodle module needs to send a preview area view calculation request to the editing module.

The preview area view calculation request may carry coordinates of the doodle trace (for example, coordinates relative to the original picture), a line color, a line size, and the like. In this embodiment of this application, if frame adding is the first editing operation on picture 1, the original picture is view 1-0.

S119: After receiving the preview area view calculation request sent by the doodle module, the editing module calculates the preview area view based on the coordinates of the doodle trace carried in the calculation request, to obtain view 1-2.

In this embodiment of this application, in this case, a history editing record obtained by the editing module includes a unique identifier of frame A corresponding to step S104. The editing module may determine, based on the history editing record and the coordinates of doodle trace 1 that are carried in the currently received preview area view calculation request, that the frame operation and the doodle operation have been currently performed. According to the foregoing sequence, the doodle trace is first generated on picture 1 based on the coordinates of doodle trace 1 relative to picture 1. Even if the coordinates of doodle trace 1 on picture 1 exceed picture 1, when doodle trace 1 is generated on picture 1, no doodle trace is generated on a periphery of picture 1. Therefore, currently, the doodle trace is generated only within a range of picture 1. Then, the frame is added to picture 1 to which doodle trace 1 is added, so as to obtain view 1-2.

S120: The editing module sends the preview area view obtained through calculation to the doodle module.

S121: After receiving the preview area view, the doodle module displays the received view (view 1-2) in the preview area on the currently displayed interface, and clears doodle trace 1 on the doodle drawing layer.

As an example of the doodle module, (a) in FIG. 4 is a schematic diagram in which the doodle module displays, based on the received preview area view, the received view in the preview area of the currently displayed interface corresponding to the doodle function. In this case, the view displayed in the preview area is view 1-2.

After step S113, a complete view is displayed on the interface corresponding to the doodle function. Therefore, the doodle drawing layer is an area corresponding to view 1-0 that exists before the frame is added. However, in actual application, the doodle function may provide a zoom-in function, that is, a local area of the currently displayed view is displayed after the currently displayed view is zoomed in. In this case, the size and the position of the doodle drawing layer will change.

S122: The doodle module receives a zoom-in display operation on view 1-2 displayed in the preview area.

Refer to (a) in FIG. 4. The user may trigger, by using an operation of moving two fingers away from each other in the preview area, zoom-in display of the currently displayed view 1-2 in the preview area of the electronic device, to obtain the interface shown in (b) in FIG. 4. The local area of view 1-2 is displayed in the preview area of the interface.

Refer to (b) in FIG. 4. The user may trigger, through an operation of sliding two fingers in the preview area, view 1-2 displayed in the preview area of the electronic device to move, to obtain an interface shown in (c) in FIG. 4.

Refer to (c) in FIG. 4. Content displayed in the preview area on the current interface is a lower-right corner area of view 1-2. The displayed content includes a part of view 1-0 and a part of the frame.

In this embodiment of this application, after the user triggers, by using the operation of moving two fingers away from each other in the preview area, zoom-in display of the currently displayed view 1-2 in the preview area of the electronic device, for example, the interface shown in (b) in FIG. 4, because the preview area does not include the frame, the electronic device re-determines a position and a size that are corresponding to the doodle drawing layer as a position and a size corresponding to all content displayed in the entire preview area.

After the user triggers, through a double-finger sliding operation in the preview area, view 1-2 displayed in the preview area of the electronic device to move, for example, the interface shown in (c) in FIG. 4, because the preview area includes the frame, the electronic device re-determines that the position and the size of the doodle drawing layer are the position and the size of all content displayed in the entire preview area minus the frame area. For details, refer to the description in the foregoing embodiment.

S123: The doodle module refreshes, based on the zoom-in display operation on view 1-2 displayed in the preview area, an area of a view displayed in the preview area.

In this embodiment of this application, content of the preview area shown in (c) in FIG. 4 is used as an example.

S124: The doodle module re-determines that an area corresponding to the doodle drawing layer is area A, and displays the doodle drawing layer on an upper layer of view 1-2.

In this embodiment of this application, after an area of view 1-2 displayed in the preview area changes with an operation of the user, the doodle module redetermines the position and the size of the doodle drawing layer on the display.

S125: The doodle module receives a doodle operation.

Refer to (d) in FIG. 4. A thick line on an image distributed inside the frame and a dotted line on the frame are drawing traces of the user in the preview area.

S126: The doodle module draws doodle trace 2 on the currently determined doodle drawing layer based on the doodle operation.

In this embodiment of this application, because the doodle drawing layer is an area in (d) in FIG. 4 in which the frame is removed, doodle trace 2 (the thick line part) is generated on the doodle drawing layer based on a sliding operation of the user in the preview area, and coordinates of a doodle operation, on the frame outside the area corresponding to the doodle drawing layer, mapped to the doodle drawing layer exceed the doodle drawing layer. Therefore, a doodle trace (the dotted line part) cannot be generated on the doodle drawing layer.

In this embodiment of this application, a doodle trace generated in a previous doodle operation is marked as doodle trace 1, and a doodle trace generated in a current doodle operation is marked as doodle trace 2.

S127: After the doodle operation ends, the doodle module sends a preview area view calculation request to the editing module. The preview area view calculation request carries coordinates of the current doodle trace 2 relative to the original picture, a color, and a line size.

For this process, refer to the description in step S118. Details are not described herein again.

S128: After receiving the preview area view calculation request sent by the doodle module, the editing module calculates the preview area view based on parameters such as the coordinates of doodle trace 2 relative to the original picture that are carried in the calculation request, to obtain view 1-3.

In this embodiment of this application, the editing module obtains a stored editing operation record: the unique identifier of frame A and the coordinates of doodle trace 1 relative to the original picture. According to the coordinates of doodle trace 2 relative to the original picture that are carried in the currently received preview area view calculation request, the editing module may first generate doodle trace 1 and doodle trace 2 on the original picture based on the coordinates of doodle trace 1 and doodle trace 2 on the original picture, and then add frame A to the original picture on which doodle trace 1 and doodle trace 2 are generated, to obtain view 1-3.

S129: The editing module sends the preview area view obtained through calculation to the doodle module.

S130: After receiving the preview area view, the doodle module displays a part of the received view 1-3 in the preview area on the currently displayed interface, and clears doodle trace 2 on the doodle drawing layer.

It should be noted that after step S129, the preview area view obtained by the doodle module is view 1-3. However, content displayed in the current preview area is a local area of the zoomed-in view 1-2. Therefore, when the received view 1-3 is displayed, the currently displayed local area of view 1-3 needs to be determined based on the currently displayed local area of view 1-2.

It may be understood from the foregoing examples that in the user doodle process, the doodle trace is generated in real time on the doodle drawing layer. Therefore, coordinates of each point in the doodle trace on the doodle drawing layer need to be obtained, that is, coordinates of a real-time position of the finger of the user on the doodle drawing layer need to be obtained.

After the user finishes doodle, when a view is being generated, it is necessary to obtain coordinates of each point in the doodle trace on the original picture, that is, coordinates of each position of the finger of the user on the original picture in the doodle operation process.

However, in actual application, a position of the finger of the user is obtained in real time by the touch screen of the electronic device. Therefore, the coordinates received by the electronic device are the coordinates of the real-time position of the finger on the display in the doodle operation of the user.

The following describes how to convert the coordinates of the finger of the user on the display into the coordinates of the finger of the user on the doodle drawing layer to display a doodle trace in real time in a doodle process of the user, and how to convert the coordinates of the finger of the user on the display into coordinates of the finger of the user on the original picture, to generate a view after the doodle operation of the user ends.

A process of drawing doodle trace 2 is used as an example. First, a position relationship between the displayed view 1-2, the original picture, the display, content currently displayed in the preview area of the display, and the doodle drawing layer is described.

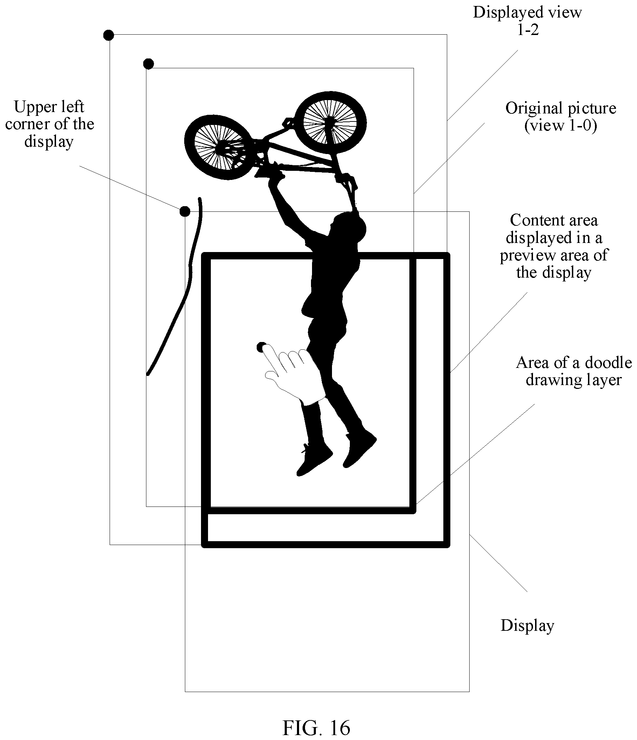

Refer to FIG. 16. A view displayed in a preview area of a currently displayed interface on the display is 1-2, and view 1-2 includes content of view 1-0, a doodle trace on the content of view 1-0, and a frame outside the content of view 1-0. However, the preview area displays only a part of area of view 1-2. An area corresponding to the doodle drawing layer is the part of area minus an area of the frame.

Coordinates of the finger of the user on the display are equivalent to coordinates of the finger of the user that use an upper left corner of the display as an origin.

Coordinates of the finger of the user on the original picture are equivalent to coordinates of the finger of the user that use an upper left corner of the original picture as an origin.

Coordinates of the finger of the user on the currently displayed view are equivalent to coordinates of the finger that use an upper left corner of the displayed view 1-2 as an origin.

Certainly, in this embodiment of this application, an upper left corner is used as an example of an origin. In actual application, the origin may be another corner or a center point.

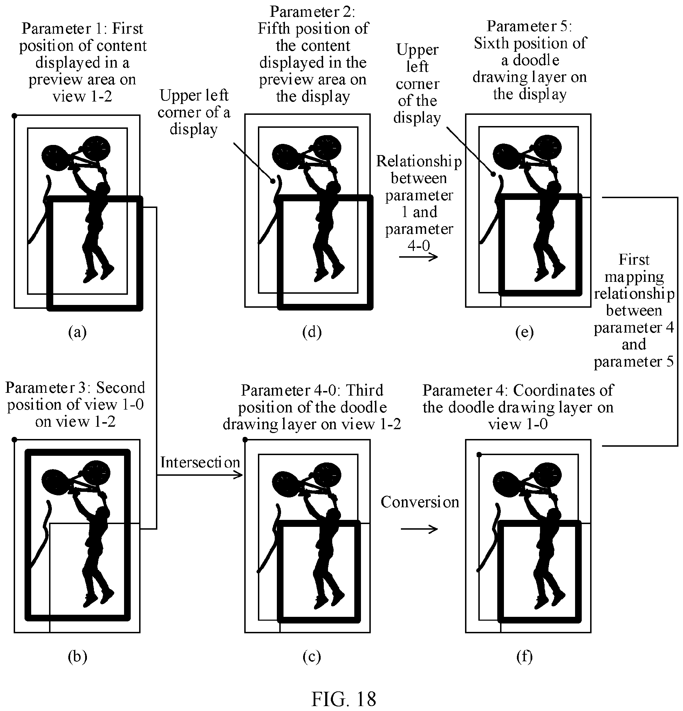

Refer to FIG. 17 and FIG. 18. FIG. 17 and FIG. 18 show a calculation process of calculating a position of an area corresponding to a doodle drawing layer on a display, a first mapping relationship between coordinates on the display and coordinates on an original picture, and a second mapping relationship between coordinates on the original picture and coordinates on the doodle drawing layer according to an embodiment of this application.

Step S1101: Obtain a first position (parameter 1) of content displayed in a preview area on view 1-2.

In this embodiment of this application, an upper left corner is used as an example of a coordinate origin.

Refer to (a) in FIG. 18. (a) in FIG. 18 shows the first position of the content displayed in the preview area on view 1-2, which may also be understood as a set of coordinates of an area delimited by a thick black frame that use an upper left corner of view 1-2 as an origin.

In this embodiment of this application, in the interface shown in (c) in FIG. 4, when the preview area displays a part of view 1-2, coordinates of content displayed in the preview area on view 1-2 may be stored.

Step S1102: Obtain a second position (parameter 3) of view 1-0 on view 1-2.

Refer to (b) in FIG. 18. (b) in FIG. 18 shows the second position of view 1-0 on view 1-2, which may be understood as a set of coordinates of an area delimited by a thick black frame that use an upper left corner of view 1-2 as an origin.

In this embodiment of this application, when the electronic device generates view 1-1 according to view 1-0 (original picture) and frame A, a position relationship between view 1-0 and view 1-1 may be stored. Therefore, the doodle module may obtain the position of view 1-0 on view 1-1. The sizes of view 1-1 and view 1-2 are the same, and the position of view 1-0 on view 1-2 is obtained.

Step S1103: Calculate an intersection set (an intersection set of parameter 1 and parameter 3) of the first position of the content displayed in the preview area on view 1-2 and the second position of view 1-0 on view 1-2, to obtain a third position (parameter 4-0) of the doodle drawing layer on view 1-2.

Refer to (c) in FIG. 18. (c) in FIG. 18 shows an intersection set of parameter 1 and parameter 3. Because parameter 1 and parameter 3 are coordinate sets in a same coordinate system, an intersection set of the coordinate set of parameter 1 and the coordinate set of parameter 3 may be directly obtained through calculation. The obtained intersection set is the third position of the doodle drawing layer on view 1-2, that is, a set of coordinates of an area delineated by a black thick frame that use an upper left corner of view 1-2 as an origin.

Step S1104: Obtain a fourth position (a relationship between parameter 1 and parameter 4-0) of the doodle drawing layer on the content displayed in the preview area based on the first position of the content displayed in the preview area on view 1-2 and the third position of the doodle drawing layer on view 1-2.

Parameter 1 and Parameter 4-0 are in a same coordinate system, an area in parameter 1 is the content displayed in the preview area, and an area in parameter 4-0 is an area corresponding to the doodle drawing layer, so that the fourth position of the doodle drawing layer on the content displayed in the preview area can be obtained. It may also be understood that the relationship between parameter 1 and parameter 4 may be used to determine how to take out, from the content displayed in the preview area, the area corresponding to the doodle drawing layer in the same coordinate system.

Step S1105: Obtain a fifth position (parameter 2) of the content displayed in the preview area on the display.

Refer to (d) in FIG. 18. (d) in FIG. 18 shows the fifth position (parameter 2) of the content displayed in the preview area on the display, that is, a set of coordinates of an area delimited by a thick black frame that use an upper left corner of the display as an origin.

In this embodiment of this application, an upper left corner of the content displayed in the preview area is not necessarily the upper left corner of the display. For details, refer to the schematic diagram of the position relationship shown in FIG. 16.

When the interface corresponding to the doodle function displays a part of view 1-2 in the preview area, there is a mapping relationship between a coordinate system using the upper left corner of the display as an origin and a coordinate system using the upper left corner of view 1-2 as an origin (when the electronic device displays a part of view 1-2, the mapping relationship may be determined). Based on the mapping relationship, the first position (parameter 1) of the content displayed in the preview area on view 1-2 may be mapped to the fifth position (parameter 2) of the content displayed in the preview area on the display.

Step S1106: Obtain a sixth position (parameter 5) of the doodle drawing layer on the display based on the fourth position (the relationship between parameter 1 and parameter 4-0) of the doodle drawing layer on the content displayed in the preview area and the fifth position (parameter 2) of the content displayed in the preview area on the display.

The relationship between parameter 1 and parameter 4 is consistent with a relationship between parameter 2 and parameter 5. Therefore, parameter 5 may be obtained when the relationship between parameter 1 and parameter 4 is determined and parameter 2 is known.

Refer to (e) in FIG. 18. In the process of converting parameter 2 into parameter 5, it is equivalent to determining, in the content displayed in the preview area in the same coordinate system, the area corresponding to the doodle drawing layer. Parameter 5 is the sixth position of the doodle drawing layer on the display, that is, a set of coordinates of an area delimited by a thick black frame that use the upper left corner of the display as a coordinate origin.

By performing this step, the position and the size of the area corresponding to the doodle drawing layer relative to the display may be obtained. Therefore, the doodle drawing layer may be generated on the display.

The following describes a process of obtaining the first mapping relationship.

Step S1201: Obtain a seventh position (parameter 4) of the doodle drawing layer on view 1-0 based on the second position (parameter 3) of view 1-0 on view 1-2 and the third position (parameter 4-0) of the doodle drawing layer on view 1-2.

In this embodiment of this application, refer to (b) in FIG. 18 and (c) in FIG. 18. It may be understood that parameter 3 and parameter 4-0 belong to different areas in a same coordinate system, and parameter 4-0 is included in parameter 3. Therefore, the seventh position (parameter 4) of parameter 4-0 in parameter 3 may be obtained based on the relationship between parameter 3 and parameter 4-0. For details, refer to a position of an area delineated by a black thick frame shown in (f) in FIG. 18 on view 1-0.

Step S1202: Obtain the first mapping relationship between coordinates on the display and coordinates on view 1-0 based on the seventh position (parameter 4) of the doodle drawing layer on view 1-0 and the sixth position (parameter 5) of the doodle drawing layer on the display.

Parameter 4 and parameter 5 are coordinate sets of a same area in different coordinate systems. Therefore, the first mapping relationship between a coordinate system in which parameter 4 is located and a coordinate system in which parameter 5 is located may be obtained.

The first mapping relationship may convert coordinates on view 1-0 (the original picture) and coordinates on the display, so that coordinates of a contact point (a contact point between a user's finger and the display) in a doodle operation are subsequently converted into coordinates of a contact point on view 1-0, that is, coordinates of the contact point on the original picture.

The following describes a process of obtaining the second mapping relationship.

Step S1301: Obtain the second mapping relationship between coordinates on view 1-0 and coordinates on the doodle drawing layer based on the seventh position (parameter 4) of the doodle drawing layer on view 1-0.

In this embodiment of this application, parameter 4 is a set of coordinates of an area corresponding to the doodle drawing layer on view 1-0. Therefore, the mapping relationship between coordinates on view 1-0 and coordinates on the doodle drawing layer may be obtained. Subsequently, coordinates of the contact point on the original picture may be mapped to coordinates of the contact point on the doodle drawing layer.

Picture 1 (view 1-0) in the foregoing process is an original picture in this picture editing process, and view 1-2 is an original view in this doodle operation.

Similarly, before drawing doodle trace 1, the electronic device displays the interface shown in (c) in FIG. 3. Content currently displayed in the preview area is view 1-1. Therefore, the upper left corner of view 1-1 is the upper left corner of the content displayed in the preview area. The flowchart shown in FIG. 17 may still be used to calculate the position of the area corresponding to the doodle drawing layer on the interface shown in (c) in FIG. 3 on the display, the first mapping relationship between coordinates on the display and coordinates on the original picture, and the second mapping relationship between coordinates on the original picture and coordinates on the doodle drawing layer. It should be noted that the mapping relationship in the interface shown in (c) in FIG. 3 is different from the mapping relationship in the interface shown in (d) in FIG. 4.

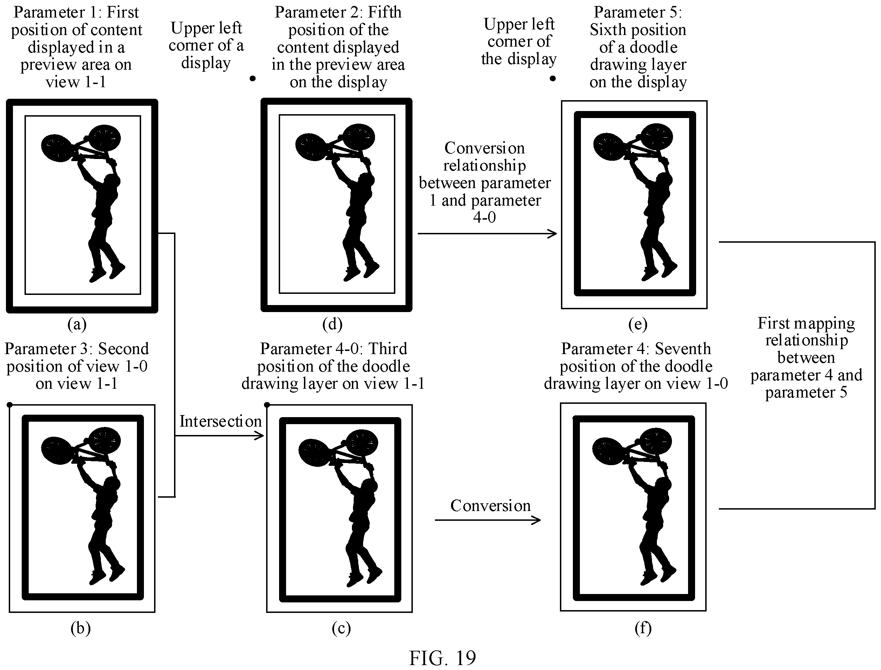

Refer to (a) in FIG. 19. (a) in FIG. 19 shows the first position of the content displayed in the preview area on view 1-1, that is, a set of coordinates of an area delimited by a thick black frame that use an upper left corner of view 1-1 as an origin.

Refer to (b) in FIG. 19. (b) in FIG. 19 shows the second position of view 1-0 on view 1-1, that is, a set of coordinates of an area delimited by a thick black frame that use an upper left corner of view 1-1 as an origin.

Refer to (c) in FIG. 19. (c) in FIG. 19 shows an intersection set of parameter 1 and parameter 3. Because parameter 1 and parameter 3 are coordinates in a same coordinate system, an intersection set of parameter 1 and parameter 3 may be directly obtained through calculation, to obtain the third position of an area corresponding to the doodle drawing layer on view 1-1, that is, a set of coordinates of an area delineated by a black thick frame that use an upper left corner of view 1-1 as an origin. Certainly, in this case, parameter 4-0 is parameter 3.

Refer to (d) in FIG. 19. (d) in FIG. 19 shows the fifth position of the content displayed in the preview area on the display, that is, a set of coordinates of an area delimited by a thick black frame that use an upper left corner of the display as an origin.

The upper left corner of the display is outside the preview area. For details, refer to the relationship diagram in the interface shown in FIG. 11.

Refer to (e) in FIG. 19. (e) in FIG. 19 shows conversion of coordinates of the area corresponding to the doodle drawing layer on the display into the sixth position of the doodle drawing layer on the display, that is, a set of coordinates of an area delimited by a thick black frame that use the upper left corner of the display as an origin.

In this case, the position and size of the doodle drawing layer on the display are determined, and the doodle drawing layer may be generated on the interface shown in (c) in FIG. 3. Subsequently, the first mapping relationship and the second mapping relationship may be further generated.

For example, refer to (f) in FIG. 19. In a process of converting parameter 2 into parameter 5, it is equivalent to determining, in content displayed in the preview area in a same coordinate system, the area corresponding to the doodle drawing layer. Parameter 4 may still be obtained based on parameter 4-0 and a relationship between parameter 3 and parameter 4-0. Parameter 4 is the position of the doodle drawing layer on view 1-0, that is, a set of coordinates of the area delimited by the thick black frame that use an upper left corner of view 1-0 as an origin.

Then, the first mapping relationship is obtained based on a relationship between parameter 4 and parameter 5. Finally, the second mapping relationship (1:1) is obtained based on parameter 4.

In the foregoing embodiment, it may be understood how to convert the coordinates of the finger of the user on the display into the coordinates of the finger of the user on the doodle drawing layer to display a doodle trace in real time in a doodle process of the user, and how to convert the coordinates of the finger of the user on the display into coordinates of the finger of the user on the original picture, to generate a view after the doodle operation of the user ends.

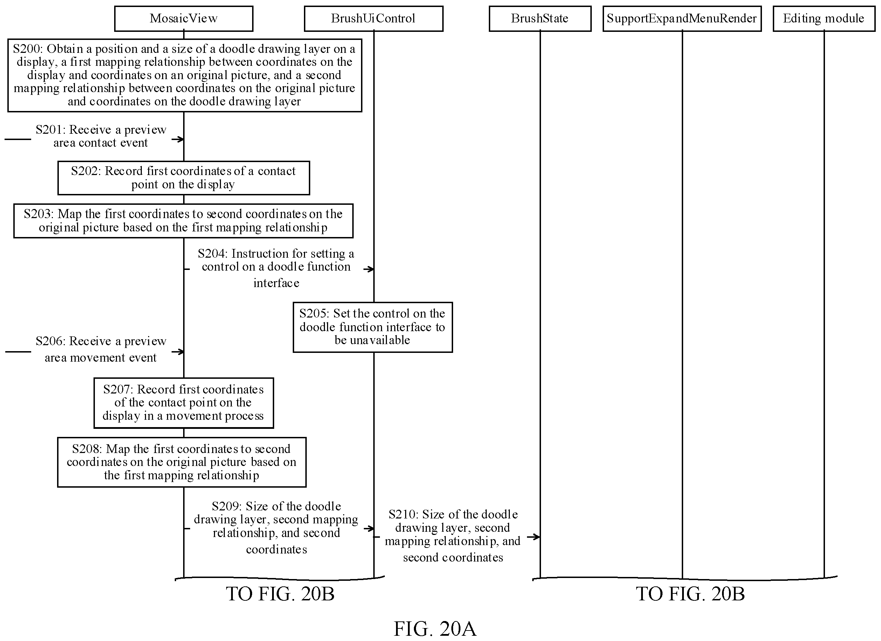

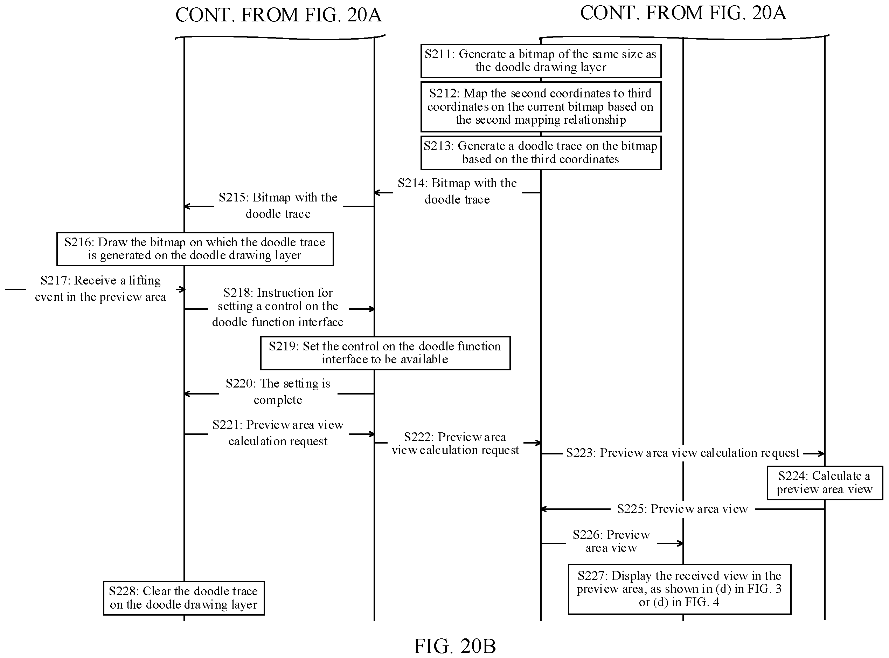

To have a clearer understanding of the foregoing embodiments, refer to a sequence diagram of generating a doodle trace in real time on the doodle drawing layer based on a doodle operation of the user and generating a view after the doodle operation of the user ends as shown in FIG. 20A and FIG. 20B. It may also be understood as step S124 to step S130 in FIG. 15B, or step S115 to step S121.

Step S200: MosaicView calculates a position and a size of an area corresponding to the doodle drawing layer on the display, a first mapping relationship between coordinates on the display and coordinates on the original picture, and a second mapping relationship between coordinates on the original picture and coordinates on the doodle drawing layer.

For a specific calculation process, refer to FIG. 16 to FIG. 19. Step S200 may be completed in step S115 or step S124.

Step S201: MosaicView receives a preview area contact event.

In this embodiment of this application, when the interface shown in (c) in FIG. 3 and the interface shown in (c) in FIG. 4 are displayed, a finger of the user may slide in the preview area of the interface of the doodle function to trigger the electronic device to generate a doodle trace in the preview area, so as to display (d) in FIG. 3 or (d) in FIG. 4.

As described above, an input process of a doodle operation mainly includes the following several processes from the user's perspective: The finger of the user touches the touch screen, the finger of the user slides on the touch screen, and the finger of the user leaves the touch screen. For the electronic device, the following several processes are included: receiving a touch event, receiving a moving event, and receiving a lifting event.

When the finger of the user contacts the preview area on the touch screen, MosaiView of the electronic device receives the preview area contact event. The event may be reported by a pressure sensor on the touch screen of the electronic device (carrying first coordinates of the touch point on the display), and transmitted to MosaicView. The preview area contact event carries the first coordinates of the contact point of the contact event on the display of the electronic device.

In actual application, the operation of the finger of the user on the touch screen in this embodiment of this application may also be an operation performed on the touch screen by another body part of the user or a stylus.

Step S202: After receiving the user contact event, MosaicView records the first coordinates of the contact point in the contact event on the display.

In this embodiment of this application, a start point at which the finger of the user slides in the preview area is generally a position at which the finger of the user first contacts the preview area on the touch screen. Therefore, after a user contact event is received, first coordinates of a contact point in the currently received user contact event on the touch screen need to be recorded, so as to record a subsequent sliding path.

Step S203: MosaicView maps the first coordinates of the contact point on the display to second coordinates on the original picture (the size of view 1-0) of picture 1 based on the first mapping relationship.

The mapping process is to map the first coordinates on the display to the second coordinates on the original picture, and a mapping relationship between the first coordinates on the display and the second coordinates on the original picture (view 1-0) is the first mapping relationship between parameter 5 and parameter 4 in the foregoing embodiment.

It should be noted that in actual application, the first mapping relationship may alternatively be obtained through calculation before step S203.

Step S204: After mapping the first coordinates to the second coordinates on the original picture, MosaicView sends a setting instruction to BrushUiControl, where the setting instruction is used to instruct BrushUiControl to set a control on the current doodle function interface to be unavailable.

Step S205: After receiving the setting instruction, BrushUiControl sets the control on the current doodle interface to be unavailable.

In this embodiment of this application, in a process of drawing a doodle trace in the preview area by the user, controls on the doodle interface (for example, Line type, Size, Color, and Eraser) are unavailable, that is, in an input process of a doodle trace, a doodle color, a line type, and a size are not changed. The user can change a doodle color, a line type, and a size of a next doodle trace after a doodle trace input ends and before entering the next doodle trace.

Step S206: MosaicView receives a preview area movement event.

In this embodiment of this application, when a finger of the user slides in the preview area on the interface corresponding to the doodle function, MosaicView of the electronic device receives a user movement event. The event may be reported by a pressure sensor on the touch screen of the electronic device, and transmitted to MosaicView. The event also carries real-time first coordinates of a point at which the finger of the user touches the display.

Step S207: When receiving the movement event of the user, MosaicView records first coordinates of a contact point on the display in the finger movement process.

Step S208: MosaicView maps the first coordinates to second coordinates (coordinates on the original picture) based on the first mapping relationship.

Step S209: MosaicView sends a size of the doodle drawing layer, the second coordinates, and the second mapping relationship to BrushUiControl.

In this embodiment of this application, a drawing process of the finger of the user on the display triggers the electronic device to display a doodle trace in the preview area in real time. Therefore, after generating the 1^{st} second coordinates of the sliding event, MosaicView sends the second coordinates of the contact event and the 1^{st} second coordinates of the sliding event to BrushUiControl together with the size of the doodle drawing layer and the second mapping relationship.

Subsequently, as the finger of the user slides, MosaicView generates the 2^{nd} first coordinates, the 3^{rd} first coordinates, and so on, and continues to send the subsequent 2^{nd} first coordinates, 3^{rd} first coordinates, and so on. The size of the doodle drawing layer and the second mapping relationship are no longer sent.

Certainly, in actual application, if the user can receive a display delay of the doodle trace, a plurality of first coordinates may be sent to BrushUiControl at a time. This is not limited in this embodiment of this application.

Step S210: After receiving the size of the doodle drawing layer, the second coordinates, and the second mapping relationship, BrushUiControl forwards the size of the target coordinate doodle drawing layer, the second coordinates, and the second mapping relationship to BrushState.

Step S211: After receiving the size of the doodle drawing layer, the second coordinates, and the second mapping relationship, BrushState generates a bitmap of the same size as the doodle drawing layer.

In this embodiment of this application, as described above, the size and the position of the doodle drawing layer on the display are determined by using parameter 5 in FIG. 18 or FIG. 19. Therefore, the bitmap of the same size as the doodle drawing layer may be obtained based on the foregoing obtained parameter 5.

Step S212: BrushState maps the second coordinates to third coordinates on the current bitmap based on the second mapping relationship.

In this embodiment of this application, the first coordinates on the display are first mapped to the second coordinates on the original picture (view 1-0), and then the second coordinates on the original picture (view 1-0) are mapped to the third coordinates on the doodle drawing layer.

In this embodiment of this application, the second coordinates of the contact point on the doodle drawing layer may be obtained based on the second mapping relationship.

Step S213: BrushState generates a doodle trace on the bitmap based on the third coordinates obtained through mapping.

In actual application, if the finger of the user moves out of the bitmap corresponding to the determined doodle drawing layer in a sliding process, converted third coordinates are mapped out of the bitmap. In this case, a doodle trace cannot be generated on the bitmap. Therefore, the doodle operation in the frame area cannot take effect on the bitmap.

Step S214: BrushState returns the bitmap that carries the doodle trace to BrushUiControl.

Step S215: After receiving the bitmap that carries the doodle trace, BrushUiControl returns the received bitmap to MosaicView.

Step S216: MosaicView draws the returned bitmap (bitmap) with the doodle trace on the current doodle drawing layer (MosaiView).

In a drawing process of the finger of the user in the preview area, step S206 to step S216 continue to be performed, so that a doodle trace is displayed in real time on the doodle drawing layer displayed in the preview area. At the user's angle, it seems as if the doodle trace is drawn on view 1-1 (or view 1-2) at a lower layer of the doodle drawing layer. Certainly, in fact, the doodle drawing layer and view 1-1 (or view 1-2) 1-2 are still two layers.

Step S217: MosaicView receives a preview area lifting event.

In this embodiment of this application, after sliding of the finger of the user in the preview area on the touch screen ends and the finger is lifted, MosaicView detects the user lifting event.

Step S218: MosaicView sends a setting instruction to BrushUiControl, where the setting instruction is used to instruct BrushUiControl to set the control on the current interface to be available.

Step S219: BrushUiControl receives the setting instruction, and sets the control on the current interface to be tappable.

In this embodiment of this application, after the finger of the user is lifted, it indicates that drawing of a doodle trace ends. In this case, the user may tap a control on the interface to modify a line type, a color, and a size of a doodle trace, and may further erase the doodle trace that has just been drawn.

Step S220: BrushUiControl sends a setting complete message to MosaicView.

Step S221: After receiving the lifting event or the message indicating that the setting is complete, MosaicView sends a preview area view calculation request to BrushUiControl.

The preview area view calculation request is used to draw the doodle trace on view 1-1 (or view 1-2). The preview area view calculation request may carry coordinates (that is, the second coordinates) of the doodle trace relative to the original picture (view 1-0). The second coordinates have been obtained in step S203 and step S208.

Step S222: After receiving the preview area view calculation request, BrushUiControl sends the preview area view calculation request to BrushState.

Step S223: After receiving the preview area view calculation request, BrushState sends the preview area view calculation request to the editing module.

Step S224: After receiving the calculation request, the editing module calculates a preview area view.

In an example of calculating view 1-3 after doodle trace 2 is drawn, the editing module obtains a stored editing operation record: the unique identifier of frame A and the coordinates of doodle trace 1 relative to the original picture. The preview area view calculation request currently received by the editing module carries the coordinates of doodle trace 2 relative to the original picture. The editing module may first generate doodle trace 1 and doodle trace 2 on the original picture based on the coordinates of doodle trace 1 and doodle trace 2 on the original picture, and then add frame A to the original picture on which doodle trace 1 and doodle trace 2 are generated, to obtain view 1-3.

Step S225: The editing module sends the preview area view obtained through calculation to BrushState.

Step S226: After receiving the preview area view, BrushState sends the preview area view to SupportExpandMenuRender.

Step S227: SupportExpandMenuRender displays the received view in the preview area based on the received preview area view.

When view 1-3 is displayed, the size of view 1-2 and the size of view 1-3 are the same. Therefore, a part of area in which view 1-2 is originally displayed also displays the same part of area of view 1-3.

Step S228: MosaicView clears the doodle trace on the current doodle drawing layer.

In actual application, in S228, a time point at which MosaicView truly clears the doodle trace is delayed by a period of time (greater than 500 ms) after S221, so as to ensure that the doodle trace on the doodle drawing layer is cleared after the display view is refreshed in the preview area.

For a process of drawing doodle trace 1 or a process of drawing doodle trace 2, refer to the embodiment shown in FIG. 17.

A difference lies in that a position and a size of the doodle drawing layer for drawing doodle trace 1 are different from those of the doodle drawing layer for drawing doodle trace 2. When the preview area view obtained after doodle trace 1 is drawn is being calculated, the history operation record includes the unique identifier of frame A, and the current doodle operation record includes the second coordinates of doodle trace 1 and the like. When the preview area view obtained after doodle trace 2 is drawn is being calculated, the history operation record includes the unique identifier of frame A and the second coordinates of doodle trace 1, and the current doodle operation record includes the second coordinates of doodle trace 2 and the like.

The size of the doodle drawing layer is set to be the same as a size of content displayed in the preview area minus the frame, so that in a process of user doodle, a doodle trace is generated in real time only in an image inside the frame, and no doodle trace is generated on the frame because a doodle operation on the frame exceeds the doodle drawing layer. After the doodle ends, when the preview area view is being generated, the doodle trace is first generated on the original picture based on the second coordinates of the doodle trace on the original picture. Therefore, no doodle trace is generated based on second coordinates beyond the original picture area, and finally, a frame is added to the original picture on which the doodle trace is drawn, so that no doodle trace exists on the frame.

In another embodiment of this application, in actual application, it may also be set that in a process of drawing a doodle by the user, when a doodle operation passes through an area inside the frame and an area in which the frame is located, doodle traces corresponding to the doodle operation are generated in both the area inside the frame and the area in which the frame is located. However, when a view is being generated or when a final picture is being generated, the doodle trace corresponding to the doodle operation is generated in the area inside the frame, and the doodle trace corresponding to the doodle operation is not generated in the frame area.

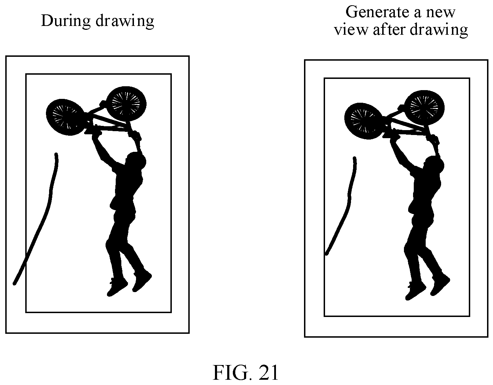

As shown in FIG. 21, when the finger of the user draws a doodle trace in the preview area on the display, a doodle trace corresponding to the doodle operation of the finger of the user may be generated on an image displayed in the entire preview area. That is, when the doodle operation passes through an area inside the frame and an area in which the frame is located, doodle traces corresponding to the doodle operation are generated in the area inside the frame and the area in which the frame is located. However, after the finger of the user is lifted from the display, the electronic device refreshes the displayed view, and the doodle trace is not displayed in the frame area of the latest display view.

In this scenario, in a process in which the user performs doodle, a size of the doodle drawing layer may be set to be the same as a size of content of the preview area currently displayed on the display, or to be greater than a size of the preview area currently displayed on the display. When a view is being generated, the size of the doodle drawing layer is the same as the size of the original picture.

In the foregoing embodiment, that the operation of adding a frame is first performed is used as an example. In actual application, another editing operation may alternatively be performed on the picture, and the operation of adding a frame is performed after the another editing operation ends, and the doodle operation is performed after the operation of adding a frame is performed.

Certainly, in actual application, regardless of whether the operation of adding a frame is first performed, a view of a preview area obtained after an editing operation is generated based on a history editing operation record in the foregoing embodiment.

When the view of the preview area is being calculated, all operation records that have been stored before the view of the current preview area may be calculated, and then an editing effect corresponding to an operation record corresponding to each layer is successively added with reference to the logical layers shown in FIG. 5 from a lower layer to an upper layer, to finally obtain the view.

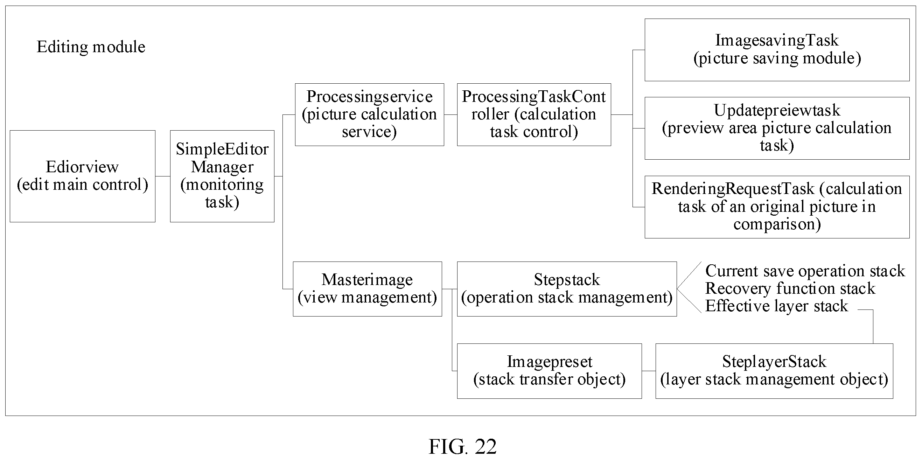

Refer to FIG. 22. FIG. 22 is an internal architecture diagram of an editing module according to an embodiment of this application.

EditorView (edit main control) is configured to interact with the outside world and interact with different editing function modules.

As an example, when editing picture 1, the electronic device obtains picture 1 from a gallery by using EditorView, and the editing module may further interact with a module corresponding to another editing function by using EditorView.

SimpleeditorManager (monitoring task) is configured to monitor an event in each editing operation and a storage acquisition event of an operation record of each edit operation.

Processing Service (picture calculation service) is configured to calculate and manage various types of pictures or views.

ProcessingTaskController (calculation task control) is configured to receive an indication of ProcessingService, and transfer the indication to a corresponding calculation module.

UpdatePreviewTask (preview area picture calculation task) is configured to calculate a view displayed in the preview area after each editing operation ends.

ImagesavingTask (picture saving module) is configured to save an edited picture.

RenderingRequestTask (calculation task of an original picture in comparison) is configured to calculate the original picture compared with a view obtained after an editing operation in some editing operations.

MasterImage (view management) is configured to manage a view.

StepStack (operation stack management) is configured to manage an operation stack (all operation records in this picture editing process are stored).

The operation stack management includes a current save operation stack, a recovery function stack, and an effective layer stack.

The current save operation stack is configured to store an operation record of each currently saved editing operation, so as to implement a revocation recovery function.

The recovery function stack is configured to: when revocation is performed, press the current save operation stack into the recovery function stack after the top of the current save operation stack is removed from the operation record.

The effective layer stack is configured to provide an operation record corresponding to each layer for calculation of the preview area view.

Imagepreset (stack transfer object) is configured to transfer an operation record in the operation stack management to the calculation task.

SteplayerStack (layer stack management object) is configured to manage the effective layer stack.

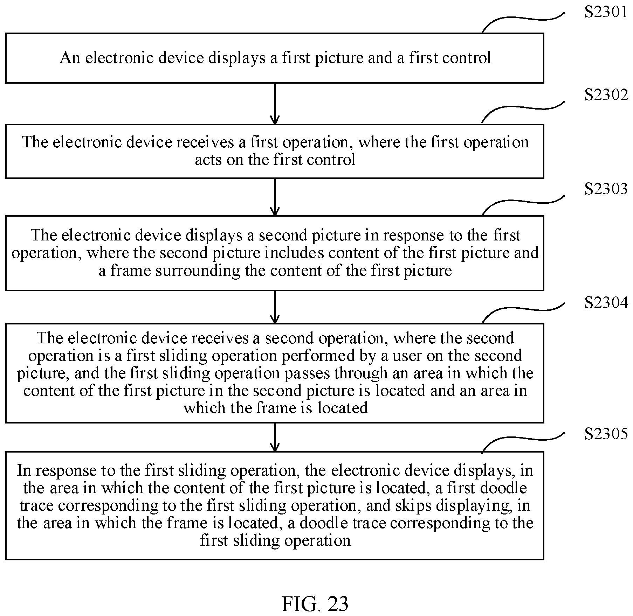

Refer to FIG. 23. FIG. 23 is a schematic flowchart of a picture editing method according to an embodiment of this application. In the embodiment shown in FIG. 23, a first picture, a second picture, a third picture, and a fourth picture are a naming manner of content presented on a display of an electronic device. In actual application, the first picture, the second picture, the third picture, and the fourth picture may be content corresponding to a view of picture 1, or may be content obtained after a view of picture 1 and another layer are superimposed.

S2301: The electronic device displays a first picture and a first control.

In this embodiment of this application, the first picture may be an original view of picture 1, or may be a view obtained after picture 1 undergoes some editing operations. As an example, the first picture may be content displayed in a preview area of the interface shown in (d) in FIG. 2.

The first control is used to add a frame to the first picture. For example, the first control may include the control of frame A shown in (d) in FIG. 2.

S2302: The electronic device receives a first operation, where the first operation acts on the first control.

The first operation in this embodiment of this application may be a tap operation performed by a user on the display (which may be a touch screen).

S2303: The electronic device displays a second picture in response to the first operation, where the second picture includes content of the first picture and a frame surrounding the content of the first picture.

In this embodiment of this application, content of the second picture may be content displayed in a preview area of the interface shown in (a) in FIG. 3.

S2304: The electronic device receives a second operation, where the second operation is a first sliding operation performed by a user on the second picture, and the first sliding operation passes through an area in which the content of the first picture in the second picture is located and an area in which the frame is located.

In this embodiment of this application, the second operation may be an operation of drawing doodle trace 1 as shown in (d) in FIG. 3.

Certainly, another step may further be included between step S2303 and step S2304. For details, refer to the description in the embodiment shown in FIG. 3.

S2305: In response to the first sliding operation, the electronic device displays, in the area in which the content of the first picture is located, a first doodle trace corresponding to the first sliding operation, and skips displaying, in the area in which the frame is located, a doodle trace corresponding to the first sliding operation.

In another embodiment of this application, after the electronic device receives the second operation, the method further includes:
the electronic device displays the second picture and a second control; and the electronic device receives a third operation, where the third operation acts on the second control.

In this embodiment of this application, the second control may be the doodle control shown in (b) in FIG. 3. The third operation may be a tap operation on the doodle control on the interface shown in (b) in FIG. 3.

In another embodiment of this application, after the electronic device receives the third operation, the method further includes:
the electronic device receives a fourth operation, where the fourth operation is a second sliding operation performed by the user on the second picture, and the second sliding operation passes through the area in which the content of the first picture in the second picture is located and the area in which the frame is located; and
in response to the second sliding operation, the electronic device does not display, in the area in which the content of the first picture is located, a doodle trace corresponding to the second sliding operation, and does not display, in the area in which the frame is located, a doodle trace corresponding to the second sliding operation.

In this embodiment of this application, before the electronic device receives the third operation, the electronic device does not enter a doodle function. In this case, no doodle trace is generated based on the sliding operation of the user on the second picture.

In another embodiment of this application, after the electronic device displays, in the area in which the content of the first picture is located, the first doodle trace corresponding to the first sliding operation, and skips displaying, in the area in which the frame is located, the doodle trace corresponding to the first sliding operation, the method further includes:
the electronic device displays a first area of a third picture, where the third picture includes the content of the first picture, the frame surrounding the content of the first picture, and the first doodle trace in the area in which the content of the first picture is located, and the first area includes partial content of the first picture and partial content of the frame;
the electronic device receives a fifth operation, where the fifth operation is a third sliding operation performed by the user on the third picture, and the third sliding operation passes through an area in which the partial content of the first picture in the first area is located and an area in which the partial content of the frame is located; and
in response to the third sliding operation, the electronic device displays, in the area in which the partial content of the first picture in the first area is located, a second doodle trace corresponding to the third sliding operation, and skips displaying, in the area in which the partial content of the frame in the first area is located, a doodle trace corresponding to the third sliding operation.

In this embodiment of this application, the third picture may be content displayed in a preview area of the interface shown in (a) in FIG. 4. The first area is an area of the content displayed in the preview area of the interface shown in (c) in FIG. 4 on the third picture.

The fifth operation is an operation of drawing a doodle as shown in (d) in FIG. 4.

In another embodiment of this application, after the electronic device receives the second operation, the method further includes:
displaying, by the electronic device, a first doodle drawing layer on an upper layer of the second picture, where the first doodle drawing layer is used to display the first doodle trace, and a position and a size of the first doodle drawing layer are the same as those of the area corresponding to the content of the first picture in the second picture.

In the interface shown in (d) in FIG. 3, the doodle drawing layer that exists when the first doodle trace (doodle trace 1) is drawn is marked as the first doodle drawing layer. The first sliding operation when the first doodle trace is drawn includes a first contact operation, a first moving operation, and a first lifting operation, which are respectively corresponding to S201, S206, and S217 in FIG. 20A and FIG. 20B.

In this embodiment of this application, the operations shown in (a) in FIG. 4 and (b) in FIG. 4 may be denoted as a sixth operation, and the sixth operation is used to trigger the electronic device to display a partial area (the first area) of the view shown in (c) in FIG. 4.

In the interface shown in (d) in FIG. 4, the doodle drawing layer that exists when the second doodle trace (doodle trace 2) is drawn is marked as the second doodle drawing layer. The third sliding operation when the second doodle trace is drawn includes a second contact operation, a second moving operation, and a second lifting operation, which are respectively corresponding to S201, S206, and S217 in FIG. 20A and FIG. 20B.

In this embodiment of this application, coordinates of a doodle trace in different coordinate systems may be distinguished by using first, second, third, fourth, and the like.

In the interface shown in (d) in FIG. 4, content displayed in the preview area may be denoted as a fourth picture.

It is to be understood that sequence numbers of the foregoing steps do not indicate an execution sequence, and an execution sequence of processes shall be determined based on functions and internal logic thereof, and shall constitute no limitation on an implementation process of the embodiments of this application.

An embodiment of this application further provides a computer-readable storage medium. The computer-readable storage medium stores a computer program. When the computer program is executed by a processor, steps in the foregoing method embodiments can be implemented.

An embodiment of this application further provides a computer program product. The computer program product, when run on an electronic device, enables the electronic device to implement steps in the foregoing method embodiments.

When the integrated unit is implemented in the form of a software functional unit and sold or used as an independent product, the integrated unit may be stored in a computer-readable storage medium. Based on this understanding, all or some of procedures of the method in the foregoing embodiments may be implemented by a computer program instructing relevant hardware in this application. The computer program may be stored in a computer-readable storage medium. When the computer program is executed, the steps of the foregoing method embodiments may be implemented. The computer program includes computer program code. The computer program code may be in a source code form, an object code form, an executable file, some intermediate forms, or the like. The computer-readable medium may include at least any entity or apparatus that can carry computer program code to a first device, a recording medium, a computer memory, a read-only memory (ROM, Read-Only Memory), a random access memory (RAM, Random Access Memory), an electric carrier signal, a telecommunication signal, and a software distribution medium, for example, a USB flash drive, a removable hard disk, a magnetic disk, or an optical disc. In some jurisdictions, according to legislation and patent practice, the computer-readable medium cannot be an electrical carrier signal or a telecommunication signal.

An embodiment of this application further provides a chip system. The chip system includes a processor, where the processor is coupled to a memory, and the processor executes a computer program stored in the memory, so as to implement steps in any method embodiment of this application. The chip system may be a single chip or a chip module including a plurality of chips.

In the foregoing embodiments, description of each embodiment has its own focus. For a part that is not described or recorded in detail in an embodiment, refer to related descriptions in another embodiment.

A person of ordinary skill in the art may notice that the example units and method steps described with reference to the embodiments disclosed in this specification can be implemented in electronic hardware, or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

The above embodiments are merely used for describing the technical solutions of this application, but are not intended to limit this application. Although this application is described in detail with reference to the foregoing embodiments, it should be appreciated by a person of ordinary skill in the art that, modifications may still be made to the technical solutions described in the foregoing embodiments, or equivalent replacements may be made to the part of the technical features; and these modifications or replacements will not cause the essence of corresponding technical solutions to depart from the spirit and scope of the technical solutions in the embodiments of this application, and shall be included in the protection scope of this application.

## Claims

1. A picture editing method, comprising:
displaying, by an electronic device, a first picture and a first control;
receiving, by the electronic device, a first operation, wherein the first operation acts on the first control;
displaying, by the electronic device, a second picture in response to the first operation, wherein the second picture comprises content of the first picture and a frame surrounding the content of the first picture;
receiving, by the electronic device, a second operation, wherein the second operation is a first sliding operation performed by a user on the second picture, and the first sliding operation passes through an area in which the content of the first picture in the second picture is located and an area in which the frame is located; and
in response to the first sliding operation, displaying, by the electronic device in the area in which the content of the first picture is located, a first doodle trace corresponding to the first sliding operation, and skipping displaying, in the area in which the frame is located, a doodle trace corresponding to the first sliding operation.

2. The method according to claim 1, wherein before the receiving, by the electronic device, a second operation, the method further includes:
displaying, by the electronic device, the second picture and a second control; and
receiving, by the electronic device, a third operation, wherein the third operation acts on the second control.

3. The method according to claim 2, wherein before the receiving, by the electronic device, a third operation, the method further includes:
receiving, by the electronic device, a fourth operation, wherein the fourth operation is a second sliding operation performed by the user on the second picture, and the second sliding operation passes through the area in which the content of the first picture in the second picture is located and the area in which the frame is located; and
in response to the second sliding operation, skipping displaying, by the electronic device in the area in which the content of the first picture is located, a doodle trace corresponding to the second sliding operation, and skipping displaying, in the area in which the frame is located, a doodle trace corresponding to the second sliding operation.

4. The method according to any one of claims 1 to 3, wherein after the displaying, by the electronic device in the area in which the content of the first picture is located, a first doodle trace corresponding to the first sliding operation, and skipping displaying, in the area in which the frame is located, a doodle trace corresponding to the first sliding operation, the method further comprises:
displaying, by the electronic device, a first area of a third picture, wherein the third picture comprises the content of the first picture, the frame surrounding the content of the first picture, and the first doodle trace in the area in which the content of the first picture is located, and the first area comprises partial content of the first picture and partial content of the frame;
receiving, by the electronic device, a fifth operation, wherein the fifth operation is a third sliding operation performed by the user on the third picture, and the third sliding operation passes through an area in which the partial content of the first picture in the first area is located and an area in which the partial content of the frame is located; and
in response to the third sliding operation, displaying, by the electronic device in the area in which the partial content of the first picture in the first area is located, a second doodle trace corresponding to the third sliding operation, and skipping displaying, in the area in which the partial content of the frame in the first area is located, a doodle trace corresponding to the third sliding operation.

5. The method according to claim 2 or 3, wherein after the receiving, by the electronic device, a third operation, and before the receiving a second operation, the method further comprises:
displaying, by the electronic device, a first doodle drawing layer on an upper layer of the second picture, wherein the first doodle drawing layer is used to display the first doodle trace, and a position and a size of the first doodle drawing layer are the same as those of the area corresponding to the content of the first picture in the second picture.

6. The method according to claim 5, wherein the first sliding operation comprises:
a first touch operation, a first moving operation, and a first lifting operation, wherein the displaying, by the electronic device in the area in which the content of the first picture is located, a first doodle trace corresponding to the first sliding operation, and
skipping displaying, in the area in which the frame is located, a doodle trace corresponding to the first sliding operation in response to the first sliding operation comprises:
in response to the first moving operation, displaying, by the electronic device on the first doodle drawing layer, the first doodle trace corresponding to the first sliding operation, and skipping displaying, in an area outside the first doodle drawing layer, a doodle trace corresponding to the first sliding operation.

7. The method according to claim 6, wherein the method further comprises:
displaying, by the electronic device, a third picture in response to the first lifting operation, wherein the third picture comprises the content of the first picture, the frame surrounding the content of the first picture, and the first doodle trace in the area in which the content of the first picture is located; and
clearing, by the electronic device, the first doodle trace on the first doodle drawing layer.

8. The method according to claim 7, wherein after the displaying, by the electronic device, a third picture, the method further comprises:
receiving, by the electronic device, a sixth operation, wherein the sixth operation is used for triggering the electronic device to display a first area of the third picture;
displaying, by the electronic device, the first area of the third picture in response to the sixth operation; and
displaying, by the electronic device, a second doodle drawing layer on an upper layer of the first area of the third picture, wherein the second doodle drawing layer is used to display a second doodle trace, and a position and a size of the second doodle drawing layer are the same as those of an area corresponding to content of the first picture in the first area of the third picture.

9. The method according to claim 8, wherein the method further comprises:
receiving, by the electronic device, a third sliding operation, wherein the third sliding operation comprises: a second contact operation, a second moving operation, and a second lifting operation;
in response to the second moving operation, displaying, by the electronic device on the second doodle drawing layer, a second doodle trace corresponding to the third sliding operation, and skipping displaying, in an area outside the second doodle drawing layer, a doodle trace corresponding to the third sliding operation;
displaying, by the electronic device, a first area of a fourth picture in response to the second lifting operation, wherein the fourth picture comprises the content of the first picture, the frame surrounding the content of the first picture, and the first doodle trace and the second doodle trace in the area in which the content of the first picture is located; and
clearing, by the electronic device, the second doodle trace on the second doodle drawing layer.

10. The method according to claim 9, wherein before the displaying, by the electronic device, a second doodle drawing layer on an upper layer of the first area of the third picture, the method further comprises:
obtaining, by the electronic device, a first position of the first area on the third picture;
obtaining, by the electronic device, a second position of the content of the first picture on the third picture;
calculating, by the electronic device, an area in which the first position of the first area on the third picture overlaps the second position of the content of the first picture on the third picture, to obtain a third position of the doodle drawing layer on the third picture;
obtaining, by the electronic device, a fourth position of the doodle drawing layer on the first area based on the first position of the first area on the third picture and the third position of the doodle drawing layer on the third picture;
obtaining, by the electronic device, a fifth position of the first area on a display of the electronic device; and
obtaining, by the electronic device, a sixth position of the doodle drawing layer on the display based on the fourth position of the doodle drawing layer on the first area and the fifth position of the first area on the display.

11. The method according to claim 10, wherein the displaying, by the electronic device, a second doodle drawing layer on an upper layer of the first area of the third picture comprises:
displaying, by the electronic device, the second doodle drawing layer on the upper layer of the first area of the third picture based on the sixth position of the doodle drawing layer on the display.

12. The method according to claim 10 or 11, wherein after the obtaining a sixth position of the doodle drawing layer on the display, the method further comprises:
obtaining, by the electronic device, a seventh position of the doodle drawing layer on the first picture based on the second position of the first picture on the third picture and the third position of the doodle drawing layer on the third picture;
obtaining, by the electronic device, a first mapping relationship between coordinates on the display and coordinates on the first picture based on the seventh position of the doodle drawing layer on the first picture and the sixth position of the doodle drawing layer on the display; and
obtaining, by the electronic device, a second mapping relationship between coordinates on the first picture and coordinates on the doodle drawing layer based on the seventh position of the doodle drawing layer on the first picture.

13. The method according to claim 12, wherein the second moving operation carries first coordinates of a finger of the user on the display,
the displaying, by the electronic device on the second doodle drawing layer, a second doodle trace corresponding to the third sliding operation, and skipping displaying, in an area outside the second doodle drawing layer, a doodle trace corresponding to the third sliding operation in response to the second moving operation comprises:
in response to the second moving operation, mapping, by the electronic device, the first coordinates of the finger of the user on the display to second coordinates of the finger of the user on the first picture based on the first mapping relationship;
mapping, by the electronic device, the second coordinates of the finger of the user on the first picture to third coordinates of the finger of the user on the doodle drawing layer based on the second mapping relationship; and
displaying, by the electronic device on the second doodle drawing layer based on the third coordinates of the finger of the user on the doodle drawing layer, the second doodle trace corresponding to the third sliding operation.

14. The method according to claim 13, wherein the method further comprises:
storing, by the electronic device, a unique identifier of the frame corresponding to the first control;
storing, by the electronic device, fourth coordinates of the first doodle trace on the first picture; and
storing, by the electronic device, second coordinates of the second doodle trace on the first picture, wherein second coordinates of the second doodle trace on the second picture comprise second coordinates of the finger of the user on the second picture in the third sliding operation.

15. The method according to claim 14, wherein the displaying, by the electronic device, a first area of a fourth picture in response to the second lifting operation comprises:
obtaining, by the electronic device, an editing record of the first picture in response to the second lifting operation, wherein the editing record of the first picture comprises: the unique identifier of the frame, the fourth coordinates of the first doodle trace on the first picture, and the second coordinates of the second doodle trace on the first picture;
generating, by the electronic device, the first doodle trace and the second doodle trace on the first picture based on the fourth coordinates of the first doodle trace on the first picture and the second coordinates of the second doodle trace on the first picture;
adding, by the electronic device based on the unique identifier of the frame, the frame to the first picture on which the first doodle trace and the second doodle trace are generated, to obtain the fourth picture; and
displaying, by the electronic device, the first area of the fourth picture based on the position of the first area on the third picture.

16. An electronic device, wherein the electronic device comprises a processor, wherein the processor is configured to run a computer program stored in a memory, to enable the electronic device to implement the method according to any one of claims 1 to 15.

17. A computer-readable storage medium, wherein the computer-readable storage medium stores a computer program, and the computer program, when executed by one or more processors, implements the method according to any one of claims 1 to 15.
